# EUROPEAN PATENT SPECIFICATION

(11) **EP 4 617 036 B1**
(45) Date of publication and mention of the grant of the patent: **09.12.2026**
(21) Application number: 25162850.9
(22) Date of filing: 11.03.2025
(51) Int. Cl.: B29C 44/14, B29C 44/30, B29C 44/32, B29D 99/00, B65G 15/14, B65G 23/24, B65G 23/44, B65G 43/00, B65G 43/04, B29C 31/00

(54) **APPARATUS FOR THE CONTINUOUS PRODUCTION OF A PANEL, PROVIDED WITH A DEVICE FOR ACTUATING, CONTROLLING AND MONITORING THE TENSIONING AND/OR TRACTION CONDITIONS, AND RELATED METHOD**
VORRICHTUNG ZUR KONTINUIERLICHEN HERSTELLUNG EINER PLATTE, VERSEHEN MIT EINER VORRICHTUNG ZUR BETÄTIGUNG, STEUERUNG UND ÜBERWACHUNG DER SPANNUNGS- UND/ODER ZUGBEDINGUNGEN, UND ENTSPRECHENDES VERFAHREN
APPAREIL POUR LA PRODUCTION EN CONTINU D'UN PANNEAU, MUNI D'UN DISPOSITIF D'ACTIONNEMENT, DE CONTRÔLE ET DE SURVEILLANCE DES CONDITIONS DE TENSION ET/OU DE TRACTION, ET MÉTHODE CORRESPONDANTE

(30) Priority: 11.03.2024 IT 202400005431
(43) Date of publication of application: 17.09.2025
(73) Proprietor: Cannon Ergos S.P.A., 20121 Milan (IT)
(72) Inventor: VOLPATO, Marco, 20121 Milano (IT); CORTI, Maurizio, 20121 Milano (IT); SAVIOLO, Luca, 20121 Milano (IT); VALERETTO, Stefano, 20121 Milano (IT)
(74) Representative: Luppi Intellectual Property S.r.l.

(56) References cited:
- EP-A1- 4 193 838
- WO-A1-2008/094021
- CN-A- 105 438 715
- CN-A- 115 570 827
- DE-U1- 29 905 210
- KR-A- 20030 087 452
- US-A1- 2010 270 131
- US-A1- 2017 081 129
- US-B2- 8 172 075

## Description

### Background of the invention

The invention relates to an apparatus and a method for the continuous production of a panel. In particular, a device is provided that is included in the apparatus and a related method for actuating, controlling and monitoring the tensioning and traction conditions of the apparatus.

Specifically, but not exclusively, the apparatus, which comprises two conveyor belts, is suitable for the continuous production of a multilayer panel having an intermediate foam layer (for example insulating foam) and outer coating layers, for example made of metal, plastics or paper.

### Prior art

Tensioning devices are known that are applied to a production apparatus having a pair of conveyor belts that are superimposed and configured to interact synergically with the outer surfaces of the multilayer panel to advance the panel being produced.

Known tensioning devices are configured to tension the belt of the respective conveyor so as to ensure correct advancement of the belt, and thus of the panel being produced.

In fact, during use the belt is subject to stress arising from the pressure exerted on each belt by the expanding foam and by the panel that is being dragged and by wear phenomena that affect the correct position and kinematics of the belt. Also mechanical settling phenomena, heating of the belt and/or of the support frame supporting the belt affect the shape and kinematics of the belt during dragging. In fact, the production apparatus operates inside a heated environment (like for example an oven) to allow and promote polymerization of the foam.

It is accordingly possible that the belt of the conveyor may generate belt component compression and misalignment phenomena downstream of the drive device, where the belt is pushed, and irregular traction and pulsing phenomena upstream of the mechanical drive system, or, in particular if the belt comprises a series of interconnected plates or tiles, it is possible that the space between the latter will not be equal in each section thereof during operation, causing misalignments, uneven movement or also lifting - along the longitudinal extent - varying locally the speed of the belt and compromising the uniform speed thereof.

In the case of dragging systems using pinions engaging the plates of the belt, periodic lengthening and shortening of the belt and thus cyclical speed variations may occur that are due to the polygonal effect arising from the rotation movement of each plate that engages the pinion. This polygonal effect is also present in the case of interconnecting plates that slide (for example by wheels) on the curved end parts of tracks.

KR20030087452 describes a conveyor device used in a foaming process comprising a belt rather than a track conveyor; it discloses an apparatus according to the preamble of claim 1 and a method according to the preamble of claim 11.

One limit of the prior art apparatuses disclosed above is that the preload is often set manually by an operator with torque wrenches: this implies not only expenditure of time and money but also unsatisfactory levels of tensioning precision. Another limit of the prior art devices is the need to repeat and overhaul tensioning periodically. The poor precision and the decline in tensioning over time can cause damage both to the production apparatus and to the panel to be produced. In fact, if the tensioning preload is too light zones of accumulation of the interconnected plates and wave tensioning zones of the belt occur with adverse repercussions on the quality of the product. On the other hand, if the preload is excessive, the process of wear to the various components of the conveyor belt and of the surfaces on which the belt runs is accelerated.

Further, in particular as the plates of the belts are connected together by connecting joints on each side and are provided with sliding means fixed to the two sides, different tensioning values between the two opposite longitudinal sides of the belt cause movements of different amounts between the longitudinal opposite sides of the belt, causing a misalignment with transverse movement components (yaw) with respect to the advancement direction of the panel; this causes on the one hand manufacturing faults in the panel (which does not advance in the desired direction) and on the other hand untimely wear to support members (for example the bearings) of the belt.

Another limit of prior-art tensioning devices is not ensuring uniform tensioning of all sections of the belt.

A further limit of prior art tensioning devices is in particular in the case of an apparatus comprising a pair of conveyor belts, each served by a respective drive member, which the drive members are unable to maintain the same speed (i.e. are unable to 20250292 EP_EN synchronize the movement of the two belts) because the dragging force acting on each belt can vary because of the very uneven tightening values; so that that correct conveying of the panel is not ensured, without which the panel gets deformed, for example bends, because of the different advancement speeds of the two belts.

In the light of what has been set out above, there is thus ample room for improvement for current tensioning devices for an apparatus that is suitable for producing a panel. In particular, it would be desirable to dispose of an apparatus that includes a device, and related method that ensure continuous and immediate correct tensioning of the belt during operation and which enables a panel to be obtained that is free of faults, in particular free of thickness, misalignment and bending faults.

### Objects of the invention

One object of the invention is to improve current tensioning devices and methods for an apparatus that is suitable for continuous production of a panel.

A further object of the invention is to provide an apparatus provided with a tensioning device that is an alternative to those of the prior art.

Another object is to provide a solution that is able to accelerate and ensure correct tensioning of the belt even during operation, avoiding the deterioration of tensioning during prolonged operation, machine downtime and maintenance costs.

Another object is to provide a solution that is able to ensure the continuous production of a panel that has high quality standards, in particular of a product that is free of bending faults.

Another object is to provide a solution that is able to increase product repeatability and quality.

### Summary of the invention

Such objects and still others are achieved by an apparatus and a method as defined in the attached claims.

Owing to the drive and thrust unit provided in the production apparatus, it is possible to apply longitudinal tensioning force to the conveyor belt that is adjustable and presettable parallel to the advancement direction of the panel being manufactured.

In particular, for each conveyor belt, a pair of curved guide and return portions is provided that is movable with respect to a corresponding support frame. Owing to the curved guide portions that are thus configured, it is possible to ensure uniform tensioning for each conveyor belt.

Owing to the device included in the apparatus according to the invention, it is possible to actuate, control and monitor continuously both the state of tensioning of the conveyor belt and the state of traction of the conveying belt.

Other features and advantages will clearly emerge in the following description.

### Short description of the drawings

The invention can be better understood and implemented with reference to the attached drawings, which illustrate embodiments by way of non-limiting example, in which:
Figure 1 is a raised side view of an apparatus for producing a panel with two superimposed conveyor belts between which the panel can advance, to which a device according to a first embodiment is applied;
Figure 2 is a partial perspective view of a support structure of a conveyor belt to which the device according to the first embodiment is applied;
Figure 2A is a partial perspective view of a conveyor belt to which the device according to the second embodiment is applied;
Figure 2B is an enlarged detail of the view of Figure 2A that shows parts of the conveyor belt;
Figure 3 is a side view of the device according to the first embodiment;
Figure 4 is a perspective view of the apparatus of Figure 1 that shows how a respective device according to the first embodiment is applied to each of the two conveyor belts;
Figure 5 is a top view of opposite end portions of the upper frame in a zone in which traction means is positioned, some components are removed to better show the screw traction means for the conveyor belt;
Figure 6 is a top view section of the apparatus of Figure 2 passing through a median plane of the end of the upper frame to show the device according to the first embodiment;
Figure 6A is a section like that of Figure 6 of the device according to a variant on the first embodiment;
Figure 7 is a side view of a device according to a second embodiment;
Figure 7A is a raised side view of an apparatus for the production of a panel, to which a device according to a third embodiment is applied;
Figure 8 is a side view of a device according to a first variant on the third embodiment in which a force transducer means transmits force to two load cells;
Figure 9 is a side view of a second variant on the third embodiment in a second variant in which a force transducer means transmits force to a single load cell;
Figure 10 is a side view of a device according to a fourth embodiment;
Figure 11 is a section along a longitudinal plane of screw traction means;
Figure 12 is a schematic side view of a production apparatus in which there are force transducer means and displacement transducer means;
Figure 13 is a schematic side view of a production apparatus in which there are force transducer means and displacement transducer means, speed detecting means and temperature detecting means;

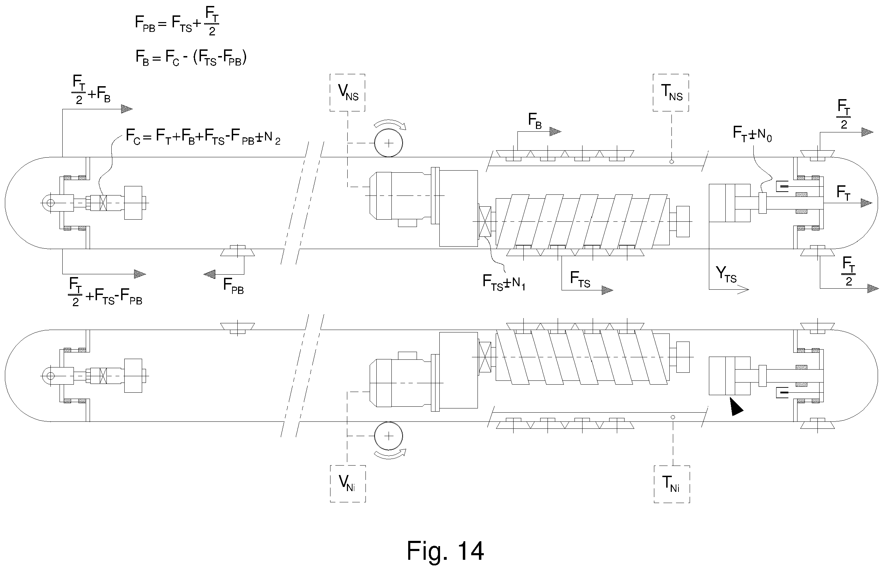

Figure 14 is a schematic side view of a production apparatus in which parameters associated with various components of the apparatus are indicated;
Figure 15 is a perspective view of a fixed portal support structure;
Figure 16 is an enlarged detail of a foot of the portal structure of Figure 15;
Figure 17 is a perspective view of a longitudinally free portal structure;
Figure 18 is an enlarged detail of a foot of the portal structure of Figure 17;
Figure 19 is a perspective view of a free portal structure with dilation transducer means;
Figure 20 is an enlarged detail of a foot of the portal structure of Figure 19.

### Detailed description

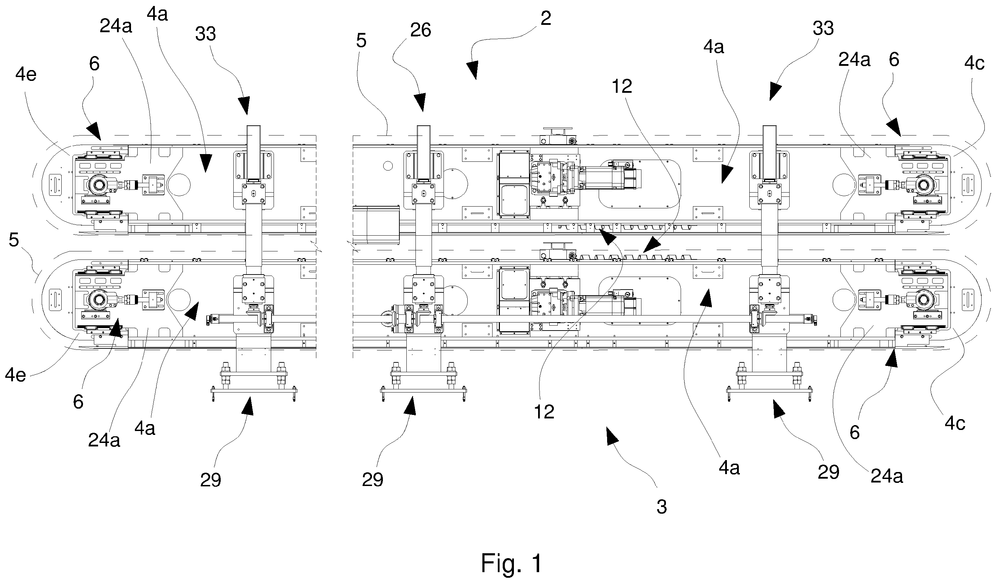

With reference to the figures mentioned above, 1 indicates an apparatus for the continuous production of a panel (Figure 1).

The apparatus 1 includes a pair of (upper and lower) support structures 4 each supporting an (upper and lower) conveyor belt 5 for conveying the movable closed loop type (schematically indicated by a dashed line in Figure 1) that will be disclosed below.

The apparatus 1 comprises, in particular, an upper conveying unit 2 and a lower conveying unit 3 positioned at a lower height than the height of the upper conveying unit 2. Each of the conveying units 2, 3 is associated with a respective conveyor belt 5. In use, between the two superimposed conveyor belts 5, i.e. the upper conveyor belt 5 and the lower conveyor belt 5, (and suitably spaced apart conveyor belts) the transit (and the formation) of the conveyed panel is permitted.

The apparatus 1 can be used in the production of a multilayer panel, in particular for a multilayer panel (also known as a "sandwich panel") having an intermediate foam layer (for example insulating foam) and outer coating and cover layers that form the outer surfaces of the panel (also called "covers" below).

The two conveyor belts 5 can be spaced apart so as to bound the containing and dragging section, also called the conveying zone below. During conveying, the foam expands, fills and solidifies inside the two outer coating surfaces of the panel forming the thickness of the cross section of the panel.

The outer coating layers can be made of sheet metal, metal foil, plastics or paper. The outer coating layers can be formed in the production apparatus from respective coils that are unwound in strips, or belts and are each fed to the respective conveyor belt 5, as will be disclosed below.

Each conveyor belt 5 is suitable for contacting (by containing or dragging) a respective surface of the outer coating layer of the panel to drag the respective surface of the outer coating layer of the panel along an advancement direction X. In particular, for forming foam panels for thermal or acoustic insulation, the foam being contained in stiff or flexible outer coating layers, the foam forms and expands inside these layers in the entry zone into the two facing conveyor belts 5. In particular, the conveyor belts 5 (of the respective conveying units 2, 3) have mutually facing surfaces arranged for contacting, and in use dragging and containing, the panel along the advancement direction X (for a path length along the advancement direction X sufficient to contain and convey the panel as far as solidification of the foam). The advancement direction X, in particular in a containing and dragging section on which the surfaces of conveyor belts 5 face one another, is substantially parallel to the facing surfaces of the conveyor belts 5.

The pair of support structures 4 can be supported by a series of portal structures 26, 33 (Figure 1 and Figures 15-20) that connect and support the two support structures 4 and can be fixed by foundations 29 to the ground or to a floor. Each of the portal structures can be adjustable so as to vary a distance between the upper and lower conveying units 2, 3 (or equivalently a distance between the two conveyor belts 5), in particular by raising or lowering the upper conveying unit 2 and the respective upper conveyor belt 5, thus varying the thickness of the panel being manufactured.

In use, a cover that forms the outer lower coating layer of the panel sandwich is unwound in the form of a strip or belt from a respective coil continuously and placed resting on the upper surfaces of the lower conveyor belt 5 that drags the sandwich panel along the aforesaid advancement direction X.

At the same time, in an identical manner, the further cover that forms the upper outer coating layer of the panel sandwich is unwound in the form of a further strip (or belt) from a further respectively coil continuously and placed, in particular in a state of tension, resting on the lower surface of the upper conveyor belt 5 that makes it advance along the advancement direction X.

Between the two upper and lower conveyor belts 5, in the conveying zone, in particular at the start of the advancement path of the panel (with respect to the advancement direction X), dispensing means can be provided for dispensing the reactive mixture for dispensing the mixture of reagent resins or reactive mixture. A table body (not shown) can be provided in the conveying zone on which the lower cover can slide that protrudes at the same height, to the inlet zone of the lower 3 conveyor belt 5. The dispensing means for dispensing the reactive mixture is configured, in particular, to pour and distribute a layer of polyurethane or phenol resin mixture on the further strip of sandwich cover dragged by the lower conveyor belt 5.

The mixture of reagent resins, intended to expand and polymerize by forming the foam that makes up the intermediate layer of the panel sandwich to be produced, can have a liquid or creamy consistency and, following a chemical reaction, can expand freely developing polyurethane or phenol foam. By expanding, the foam comes progressively into contact with and adheres to the strip or belt that forms the upper outer coating layer (cover) of the panel sandwich, which strip is dragged and fed according to the advancement direction X from the upper conveyor belt 5 that is movable parallel to the underlying further strip and also supports the thrust of the expanding foam; this upper cover is dragged parallel to the underlying further strip that forms the lower cover.

A single continuous panel is then obtained progressively that is conveyed according to the advancement direction X and the plate form of which is maintained, during expansion of the foam and consolidation thereof by polymerization, by the two conveyor belt 5 units that convey and contain the panel during expansion and polymerization of the fed foam.

Each of the (upper and lower) support structures 4 comprises, for the respective conveyor belt 5, a frame 4a, 4b (supported by the portal structures), a first curved guide and return portion 4c and a second curved guide and return portion 4d (Figures 1, 2, 3, 5 and 5). The frame 4a, 4b is not able to move longitudinally (apart from dilation caused by thermal variations). As mentioned, the frame 4a, 4b (together with the curved guide portions) in particular of the upper conveyor belt 5 (of the upper conveying unit 2) can move vertically to vary the distance from the lower conveyor belt 5 (of the lower conveying unit 3).

The conveyor belts 5 run along respective guide rails 14a, 14b (that will be disclosed below) and counteract the pressure of the foam and maintain in the correct position the strips, or belts, intended to form the outer coating layers of the panel.

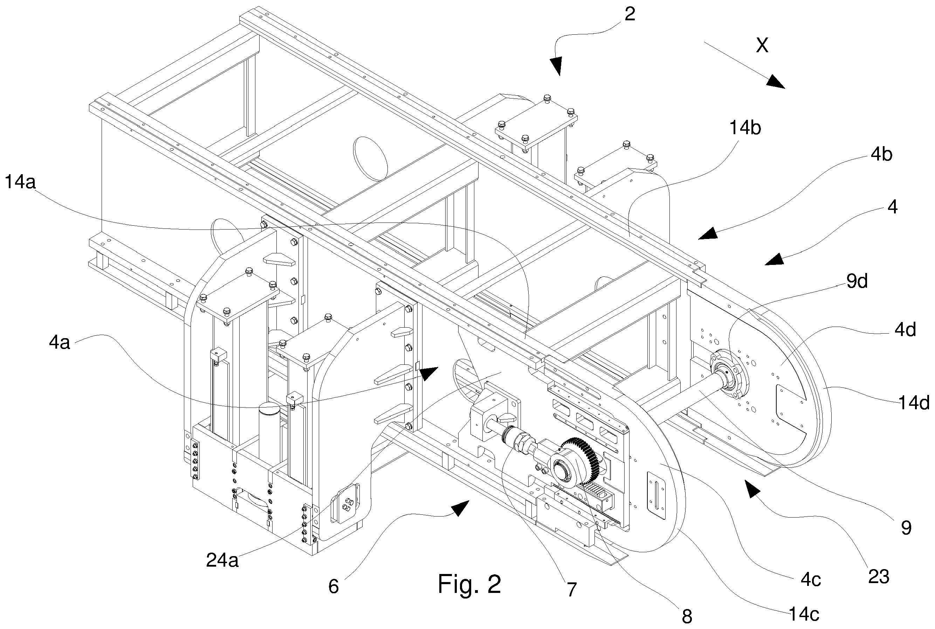

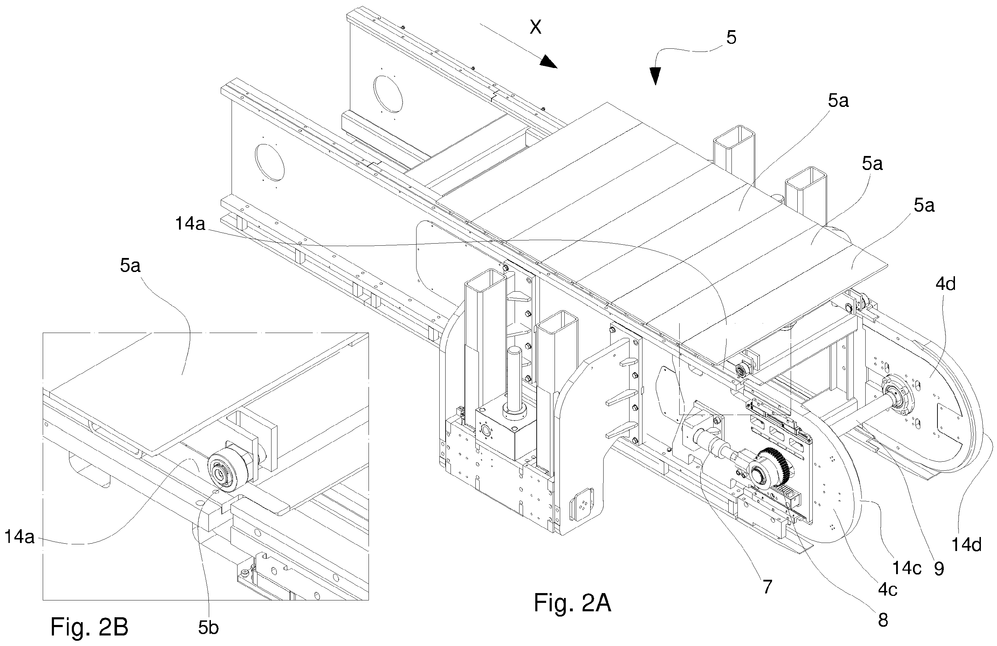

The upper and lower conveyor belts 5 can each comprise a series of conveying plates 5a that are flat or slide or tile-shaped, interconnected by articulated joints and linked together in a longitudinal direction (Figures 2A and 2B). Such conveying plates 5a can each be provided with wheels 5b, in particular with support bearings, shaped to permit sliding thereof around the respective support structures 4 (i.e. on the respective guide rails 14a, 14b and on the curved guide and return portions). The conveying plates 5a can be the same as one another or be paired in equal pairs.

If the panel to be made comprises two outer coating layers of deep-moulded sheet metal, the single conveying plates 5a can be provided with (for example removable) ridges to couple with respective longitudinal shaping ribs obtained in the sheet metal.

The conveying plates of the conveyor belts 5 comprise laterally the sliding wheels 5b or pins arranged for engaging guide surfaces obtained on, or applied to, the support structure 4 so that the conveying plates 5a remain resting, when they slide on the upper portion of the frame 4a, 4b, and remain hanging, when they slide on the lower portion of the frame 4a, 4b or in the curved guide and return portions 4c, 4d of each conveyor belt 5.

In a further embodiment of the apparatus, the conveyor belt can comprise a closed loop continuous flexible element.

The first curved guide portion 4c and the second curved guide portion 4d are movable longitudinally (with respect to the frame 4a, 4b) and are positioned at one end of the frame 4a, 4b. The first curved guide portion 4c and the second curved guide portion 4d act as a return for the respective conveyor belt 5 (by returning the sliding direction of the conveyor belt 5).

The first curved guide portion 4c and the second curved guide portion 4d form a curved outlet head for the panel. The curved outlet head can be provided with a device for actuating, controlling and monitoring the state of tensioning and/or traction of the apparatus 1, as will be disclosed below.

The first curved guide portion 4c and the second curved guide portion 4d are configured, in particular, to guide and return the opposite ends of the respective conveyor belt 5. The frame 4a, 4b can comprise, on opposite longitudinal sides, a first support side 4a and a second support side 4a (each provided with guides or guide rails 14a, 14b with which the sliding wheels 5b of the components of each conveyor belt 5 couple, as will be disclosed below).

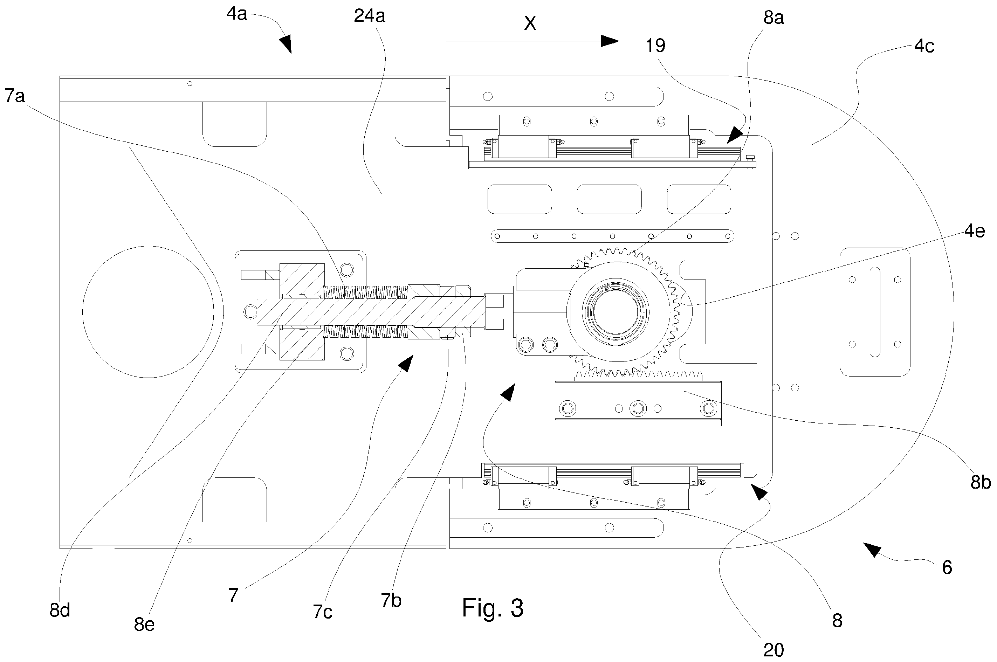

The first support side 4a and the second support side 4a can be coupled with and slidingly support, the first curved guide portion 4c and the second curved guide portion 4d respectively, parallel to the advancement direction X by one or more slider members 19, 20 (Figures 3, 7, 8 and 10).

The first side 4a and the second side 4b are arranged alongside along a direction that is transverse, in particular orthogonal, to the advancement direction X and are connected by transverse crosspieces.

Each of the sides 4a, 4b, can comprise in an end position (with respect to the advancement direction X) at least one support portion 24a, 24b.

In the illustrated embodiments, the support portions 24a, 24b are plate-shaped and are coupled with the thrust drive unit 7, 7', 7", 7"'. The plate-shaped support portions 24a, 24b are arranged substantially vertically.

In Figures 3, 7, 8 and 10 a first pair of slider members 19, 20 is illustrated configured for slidingly coupling the first side 4a with the first curved guide portion 4c.

In the illustrated embodiments, there is a further pair of slider members (which is not illustrated), positioned symmetrically with respect to a longitudinal axis of the conveyor belt 5, configured for coupling the second side 4b slidingly with the second curved guide portion 4d.

In one embodiment that is not illustrated a single slider member can be provided (oriented according to the advancement direction X) for each side.

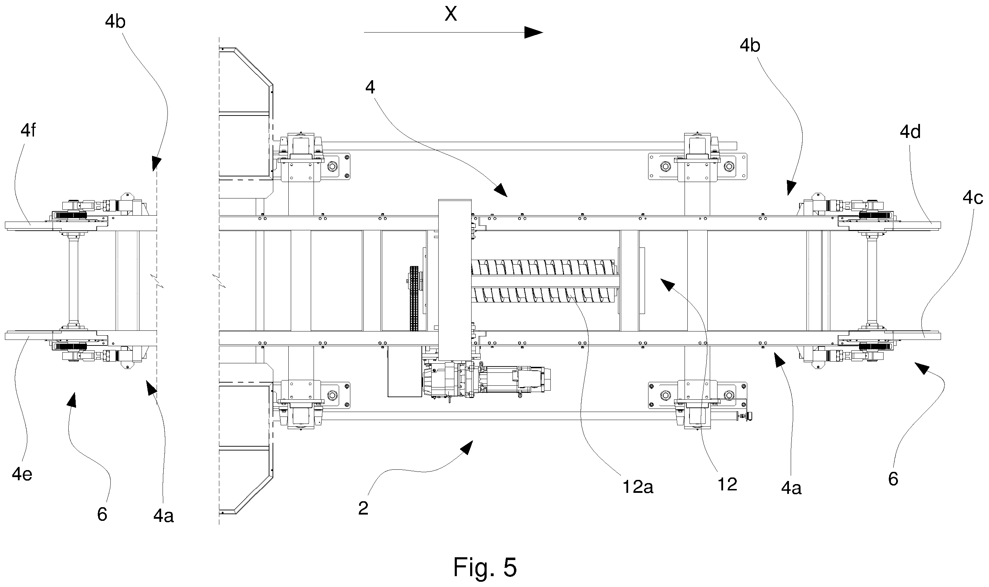

A third guide portion 4e and a fourth guide portion 4f can be provided (Figure 5) at an end opposite the support structure 4 opposite the first curved guide portion 4c and the second curved guide portion 4d respectively. Also the third curved guide portion 4e and the fourth curved guide portion 4f are arranged for guiding and returning the opposite ends of the respective conveyor belt 5.

The third guide portion 4e and a fourth guide portion 4f form a curved inlet head for the belts that form the panel. In the illustrated embodiment (Figures 1 and 5), on the curved inlet head (first curved guide portion 4c and on the second curved guide portion 4d) there is the device 6 for actuating, controlling and monitoring the state of tensioning and traction of each conveyor belt 5. In one embodiment that is not illustrated, the device for actuating, controlling and monitoring the state of tensioning and traction of each conveyor belt 5 can be provided only on the curved outlet head (third guide portion 4e and a fourth guide portion 4f).

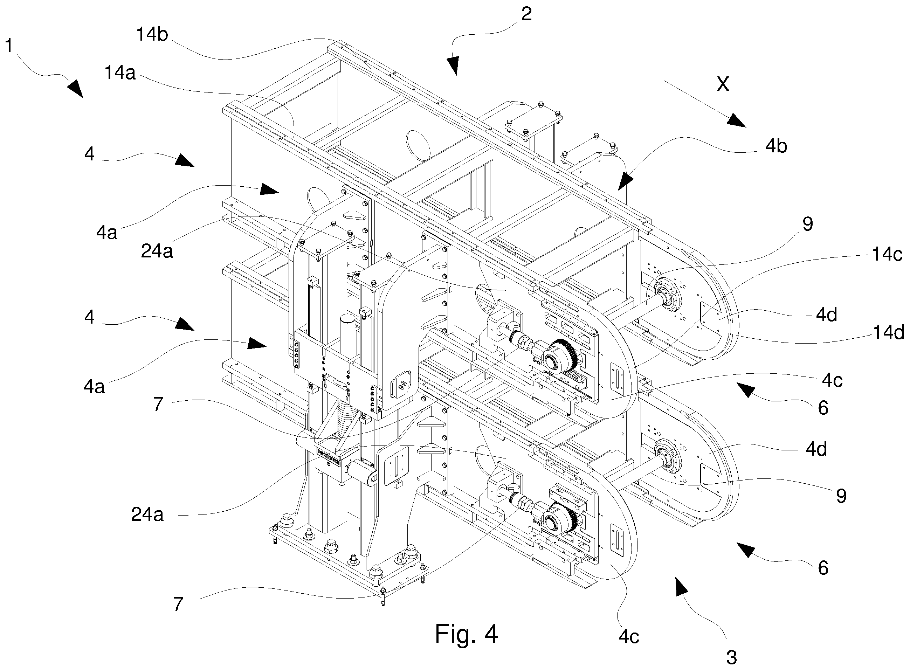

In the illustrated embodiment, the first and the second support side 4a, 4b comprise parallel rectilinear guide rails 14a, 14b (Figure 4) (along the advancement direction X) that go to define a resting plane for the conveying plates (or tiles) forming the conveyor belt 5 for conveying the panel. In this illustrated embodiment, the first and second curved guide portion 4c, 4d (and the third curved guide portion 4e and the fourth curved guide portion 4f) comprise parallel curved return guide rails 14c, 14d (Figure 4), arranged at the ends of the parallel rectilinear guide rails, and shaped to return the conveyor belt 5.

In the illustrated embodiment of the apparatus 1, the first curved guide portion 4c and the second curved guide portion 4d (and the third curved guide portion 4e and the fourth curved guide portion 4f) have a semicircular shape.

In one embodiment that is not illustrated of the apparatus, the curved guide portions 4c, 4d are formed by a cog with shaped teeth for engaging profiles of each plate so as to drag the plates of the rotating conveyor belt 5.

References 6, 6', 6", 6"' indicate different embodiments of a device for actuating, controlling and monitoring the state of tensioning and traction of the apparatus 1 for the continuous production of a panel; these embodiments and the main differences between the embodiments will be disclosed below.

The apparatus 1 can comprise a pair of devices 6, 6', 6", 6"' each of which can be arranged for tensioning a respective conveyor belt 5.

The device 6, 6', 6", 6" can be provided for each of the aforesaid support structures 4 and comprises a thrust drive unit 7, 7', 7", 7"' configured, in particular, to apply an adjustable and a controlled presettable longitudinal tensioning force F_{T} (to each conveyor belt 5) controlled parallel to the advancement direction X and move the first curved guide portion 4c and the second curved guide portion 4d with respect to the frame 4a, 4b.

The drive and thrust unit 7, 7', 7", 7"' is connected to an end of the respective end of the frame 4a, 4b and to a transmission assembly 23 to transmit a movement of the first curved guide portion 4c to the second curved guide portion 4d so as to ensure the same movement of the first curved guide portion 4c to the second curved guide portion 4d.

The transmission assembly 23 comprises, in particular, a connection unit 8; 8" and a coupling and transmission unit 9 that will be disclosed below in greater detail. Further, the transmission assembly 23 comprises, in particular, a further connection unit 10 which is also disclosed below in greater detail.

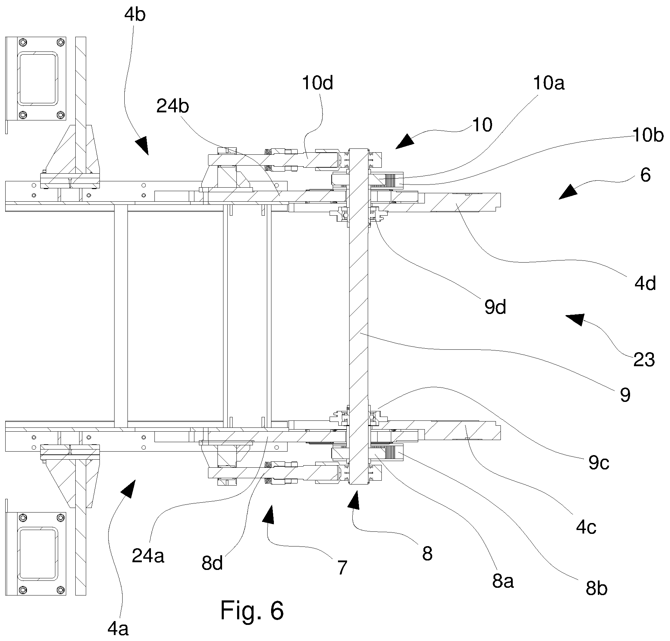

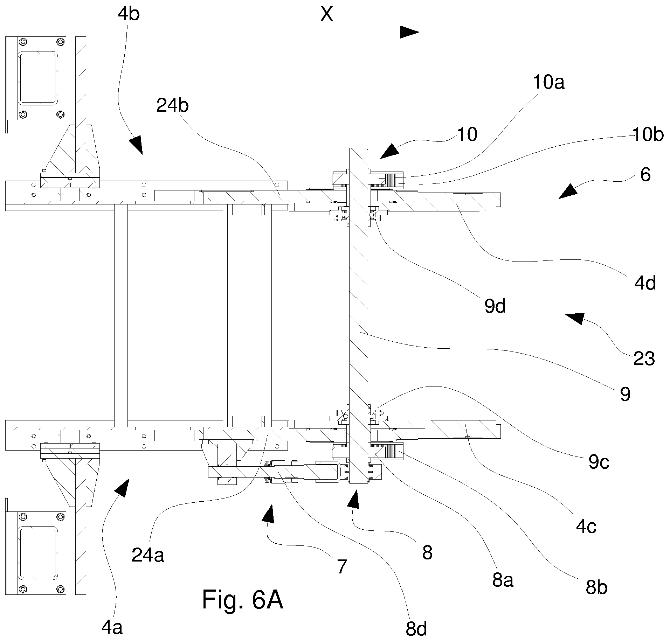

The connection unit 8, 8" coupled with, and movable with, the respective first curved guide portion 4c. Each connection unit 8, 8" comprises, in particular, a support arm 8d, 8d" carrying a gear element 8a, 8a', 8a", 8a"' (Figures 3, 7, 8 and 10) configured, in particular, to engage a respective rack element 8b, 8b', 8b", 8b"' fixed to the corresponding frame 4a, 4b. The support arm 8d, 8d" can be coupled slidingly with a linear guide element 8e, 8e', 8e" (Figures 3, 7, 8 and 9) fixed to either the first side 4a or the second side 4b to move (in a guided manner) parallel to the advancement direction X and transmit the longitudinal tensioning force F_{T} to the conveyor belt 5. In the illustrated embodiments of the tensioning device in the figures, the linear guide element 8e, 8e', 8e" is fixed to the first side 4a of the frame 4a, 4b. The connection unit 8, 8" further comprises a bearings element 9c (Figure 6) for rotatingly supporting a shaft 9, which will be disclosed below. In the illustrated embodiments of the tensioning device, the support arm 8d, 8d" extends substantially parallel to the advancement direction X.

Each connection unit 8, 8" is connected, in particular by bearing supports 9c, 9d, to a coupling and transmission unit 9 (Figures 2 and 6) configured, in particular, to transmit (by the rotation of the gear elements 8a, 8a', 8a", 8a"' and of a further gear element 10a as disclosed below) the movement of the connection unit 8, 8" and the longitudinal force applied to the respective second curved guide portion 4d such that a movement of the first curved guide portion 4c is matched by the same movement of the respective second curved guide portion 4d.

The further connection unit 10 is coupled with, and movable with, the second curved guide and return portion 4d. The further connection unit 10 is connected to the respective connection unit 8, 8" through the respective coupling and transmission unit 9. Also the further connection unit 10 comprises, in particular, a further gear element 10a configured to engage a further rack element 10b fixed to the frame 4a, 4b.

In the embodiments of the device 6 illustrated in Figures 5 and 6, the further connection unit 10 provided between the first side 4a and the first movable curved guide portion 4c has a configuration that mirrors the connection unit 8 provided between the second side 4b and second curved guide portion 4d. In particular, in these embodiments the further connection unit 10 has a further support arm 10d.

In one variant on the first embodiment of the device 6 illustrated in Figure 6A, a sole support arm is provided between the first side 4a and the first curved guide portion 4c, namely the support arm 8d.

The coupling and transmission unit comprises a transmission shaft 9 that is rotatable around a rotation axis that is transverse to the advancement direction X and at the opposite ends of which both the gear element 8a, 8a', 8a", 8a"' and the further gear element 10a are fitted (that couple respectively with the further rack element 10b fixed integrally to the side 4b) respectively. The gear element 8a, 8a', 8a", 8a"' and the further gear element 10a rotate as one with the transmission shaft 9.

The transmission shaft 9 is fitted to (and constrained on) in a rotatably free manner on the first curved guide portion 4c and to the second curved guide portion 4d respectively - by respective support bearings 9c, 8d (Figure 6) - so that a rototranslational movement of the gear element 8a, 8a', 8a", 8a"' is matched by the same rototranslational movement of the further gear element 10a so as to distribute equally the adjustable and presettable longitudinal tensioning force applied by the drive and thrust unit 7, 7', 7", 7"' on both the first curved guide portion 4c and the second curved guide portion 4d.

The drive and thrust unit 7, 7', 7", 7"' comprises, in particular, at least one projectable unit 7a, 7a', 7b', 7a", 7b", 7a"' configured, in particular, to exert - parallel to the advancement direction X - the longitudinal tensioning force on the connection unit 8, 8" to tension the conveyor belt 5.

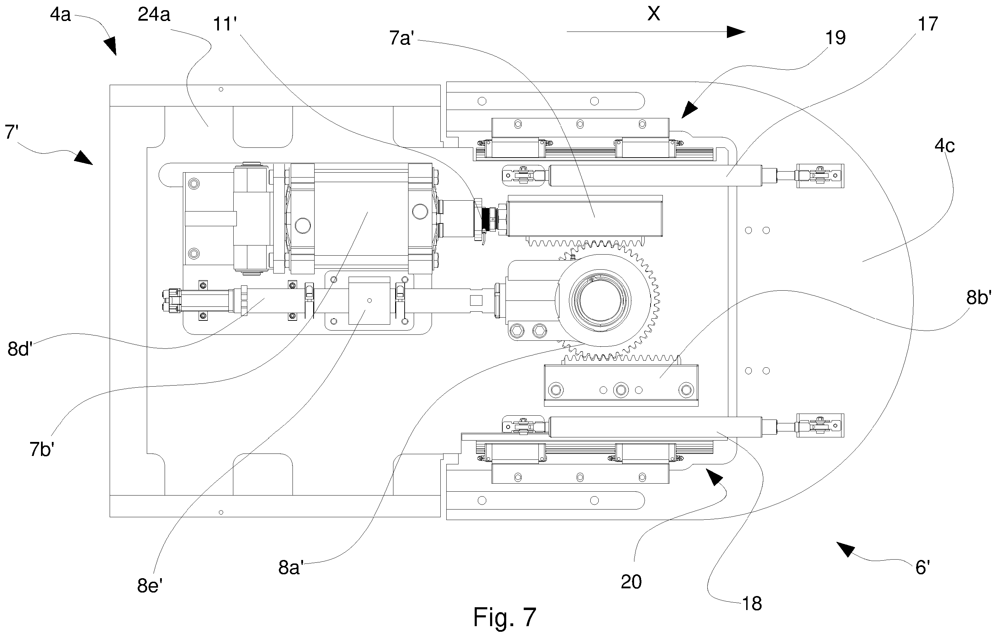

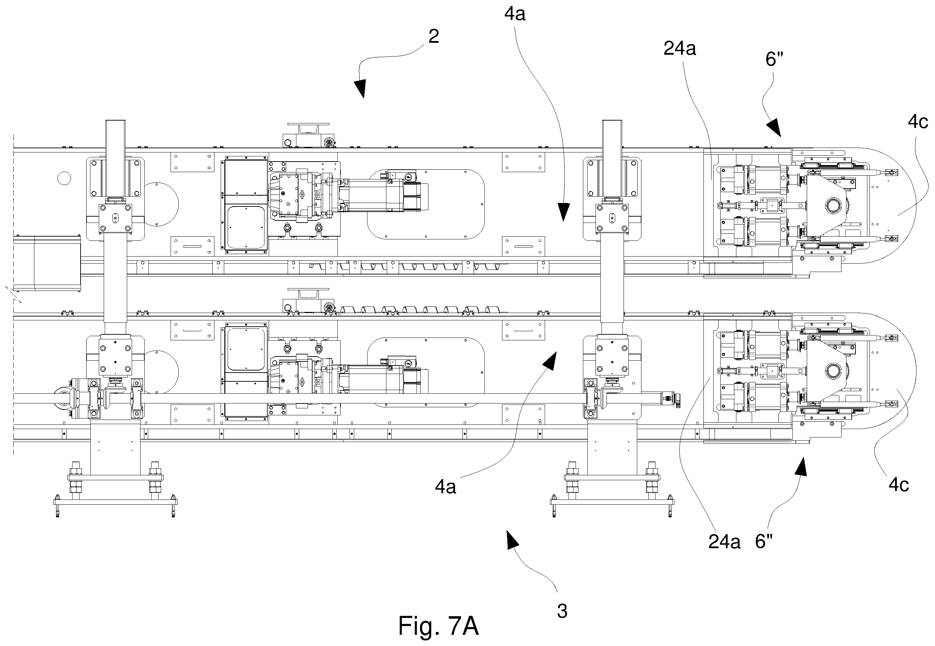

In the second and third embodiment of the tensioning device 6', 6" (Figures 7, 7A 8 and 9), the projectable unit comprises, in particular, at least one pneumatic actuator 7b', 7a", 7b" configured, in particular, to exert a presettable tensioning pneumatic force. The pneumatic force can be controlled by setting a pneumatic pressure.

In the second embodiment of the device indicated by reference 6' (Figure 7), there is a sole pneumatic actuator 7b'. In this second embodiment, the projectable unit 7' is provided at a movable end thereof (in this embodiment, the stem of the pneumatic actuator) of a movable rack portion 7a' and configured, in particular, to engage the gear element 8a'. The movable rack portion 7a' is arranged for acting on the gear element 8a' in a zone diametrically opposite the rack element 8b' (which is stationary) to duplicate the longitudinal tensioning force F_{T} exerted by the projectable unit 7'.

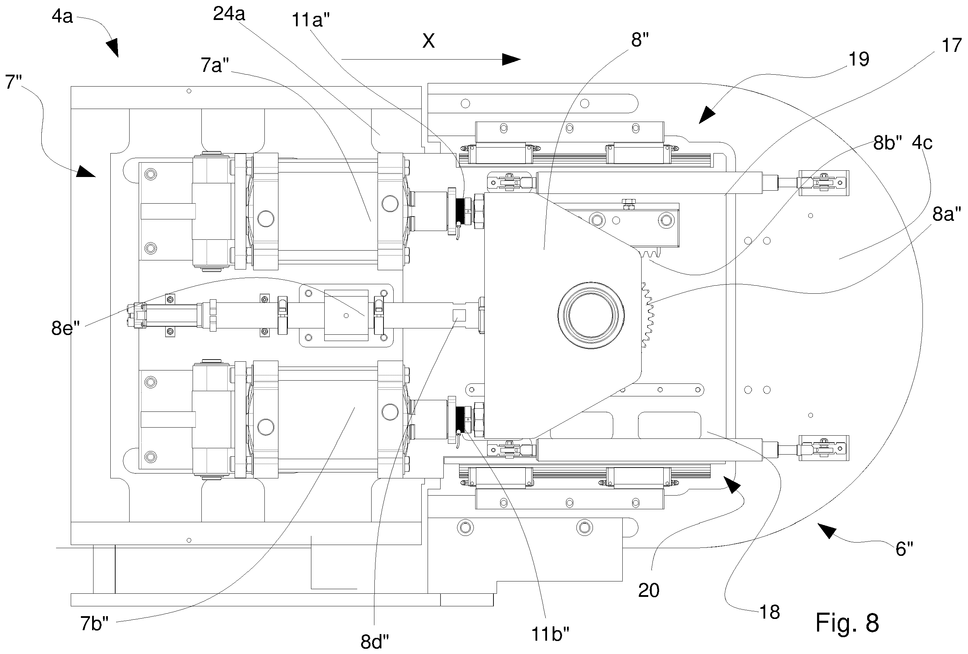

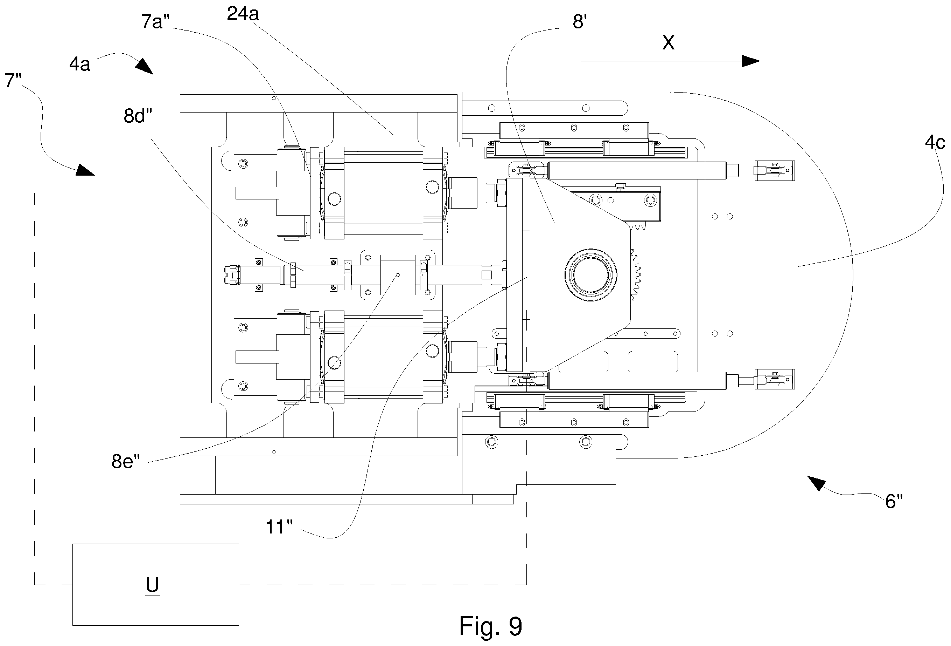

In the third embodiment of the device indicated by reference 6" (Figures 8 and 9) there is a pair of pneumatic actuators 7a", 7b". In this third embodiment, the connection unit 8, 8" comprises a plate-shaped body 8" to which the pair of pneumatic actuators 7a", 7b" is connected to transmit the longitudinal force to the gear element 8a". In this third embodiment the plate-shaped body 8" is connected to the corresponding stems of the pair of pneumatic actuators 7a", 7b" that are positioned alongside one another in a position that is symmetrical with respect to an axis of the support arm 8d".

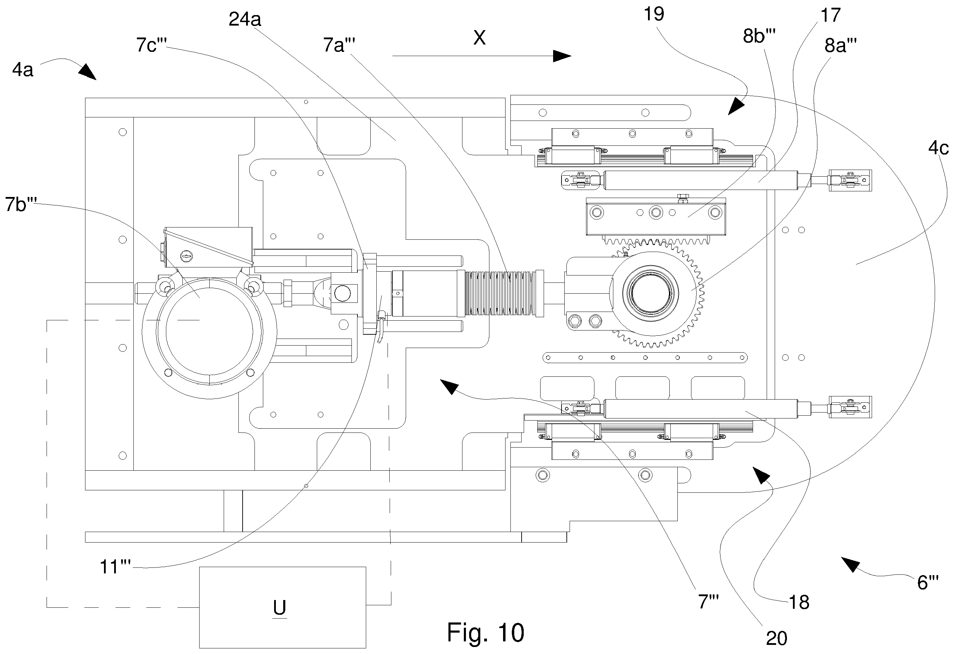

In the first embodiment of the device indicated by reference 6 (Figures 2 and 3) and in the fourth embodiment of the device indicated by reference 6"' (Figure 10), the projectable unit can comprise at least one elastic element 7a, 7a"', which is configured, in particular, to exert an elastic tensioning force. The elastic tensioning force can be controlled by a preload applied to the elastic element installed on the projectable unit. The elastic element 7a, 7a"' can comprise a coil spring or one or more disc springs (as in the illustrated embodiments).

In the first embodiment of the device 6 (Figures 2 and 3), the drive and thrust unit 7 comprises an adjusting nut 7c positioned at one end of the elastic element 7a that is operatable manually to compress or decompress the elastic element 7a by varying the preload deflection thereof - and thus the thrust exertible on the connection unit 8, 8" - and thus the longitudinal tensioning force F_{T} that is exertible on the conveyor belt 5.

In the fourth embodiment of the device 6"' (Figure 10), the drive and thrust unit 7"' comprises a tensioning adjusting device 7b"' that is operationally couplable with the elastic element 7a". The tensioning adjusting device 7b"' is configured, in particular, to permit a movement that is parallel to the advancement direction X of an extendible body 7c"' for supporting and guiding the elastic element 7a"' to compress or decompress the elastic element 7a"' by varying the preload deflection - the thrust exertible on the connection unit 8, 8" and thus the longitudinal tensioning force F_{T} exertible on the conveyor belt 5. In the illustrated embodiment, the tensioning adjusting device 7b"' can comprise and electric motor (or a reduction unit). In one embodiment that is not illustrated, the adjusting device can comprise a fluid dynamic actuator.

The device 6, 6', 6", 6"' can further comprise one or more damping means 17, 18 (Figures 7, 8 and 9 and 10) positioned between the frame 4a, 4b and respectively the first curved guide and return portion 4c (and/or the second curved guide and return portion 4d) so as to enable, during the transit of the single conveying plates 5a of the conveyor belt 5 on the curved guide portions 4c and 4d, periodic variations of the deflection of elastic elements (like for example the elastic elements7a, 7a"' or the pneumatic actuators 7a", 7b") with dampened movements so as to make the corresponding movement between the frame 4a, 4b and the curved guide portions 4c, 4d softer.

In the illustrated embodiment, two viscous dampers are provided as damping means 17, 18. In one embodiment that is not illustrated, it is possible to provide a sole damping member.

As the temperature associated with the promotion of the reaction of the polyurethane foam has to be greater than 50 °C (this temperature is usually set at about 70 °C), heating the support structures 4 of the two conveyor belts 5 causes them to dilate with respect to the foundations. In the illustrated embodiments, the foundations comprise foundation plates.

It should be noted that, for example, an apparatus 1 that is 40 metres long that is heated from 20 °C to 70 °C, that is mainly made of steel can dilate about 24 mm. On the other hand, the foundation plates, at the level of the floor, heat up more slowly with a much smaller temperature variation so that dilation thereof is almost negligible.

The portal structures 26, 33 that support the frame 4a, 4b of the lower conveyor belt 5 (associated with the lower conveying unit 3) and that support and can lift the frame 4a, 4b of the conveyor belt 5 (associated with the upper conveying unit 2), follow this dilation that is directed prevalently in the longitudinal direction X.

Each portal structure 26, 33 comprises, in particular, two columns provided with respective support feet 27, 34. In the illustrated embodiments, the support feet 27, 34 are plate-shaped, each comprising a plate welded to the lower end part of a respective column.

In order to enable the frames of the conveyor belts 5 to dilate without distortion and - as will be disclosed below - in order to detect the longitudinal dilation, just one portal structure, the fixed portal structure 26, can be constrained (in at least two horizontal directions that are orthogonal to one another) on the foundation plates 29 in a given section of the apparatus 1, whereas the other portal structure 33 (or the other portal structures 33, if the apparatus 1 has a relatively large longitudinal dimension) are free to slide (with respect to the foundations 29) parallel to the longitudinal direction X.

In the embodiment illustrated in Figure 1, the position of the fixed portal structure 26 is intermediate in relation to the longitudinal extent of the apparatus 1.

In the embodiment illustrated in Figure 1, for the apparatus 1 only three portal structures 26, 33 are shown, one of which is fixed (indicated by reference 26) and two are free to slide longitudinally (indicated by the references 33).

In one embodiment that is not illustrated, the fixed portal structure 26 can be positioned in an inlet zone of the panel.

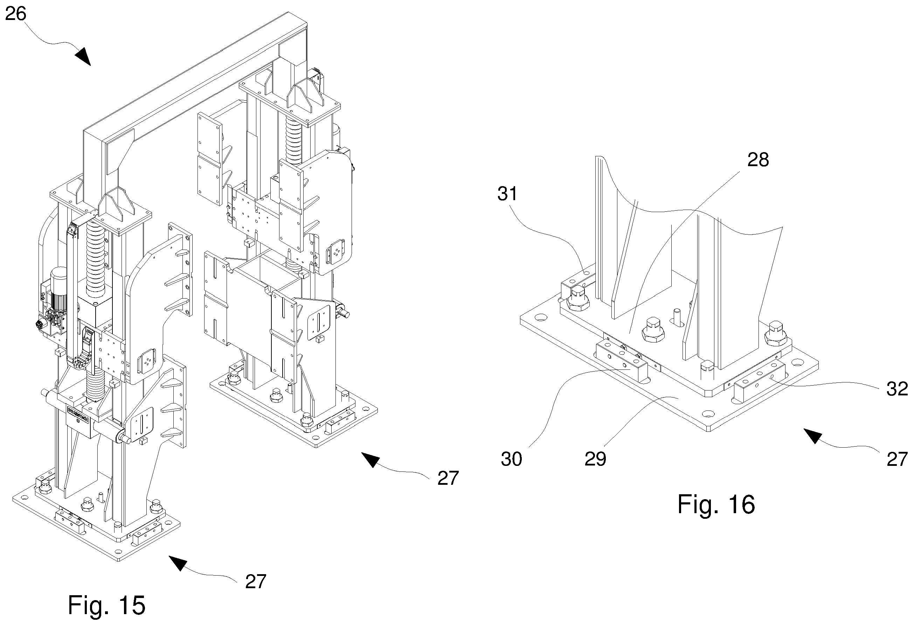

As mentioned, the fixed portal structure 26 can rest on two fixed support feet 27. In the embodiment illustrated in Figures 15 and 16, the support foot 27 comprises a rectangular plate-shaped body 28 integral with the corresponding column (or equivalently with the fixed support structure 26). For each column, a foundation or foundation plate 29 is provided on the floor arranged for supportingly receiving the support feet 27. From the foundation plate 29, at least three arresting units 30, 31 32 protrude that are arranged, in use, facing three edges of the plate-shaped body 28 so as to lock the movements of the fixed support foot 27 along three horizontal directions. Each arrest unit 30, 31, 32 is provided with adjustable arresting elements (in particular screws or bolts) for contacting the aforesaid edges. The two support feet 27 and the corresponding foundation plates 29 are configured in a specular manner on both the columns.

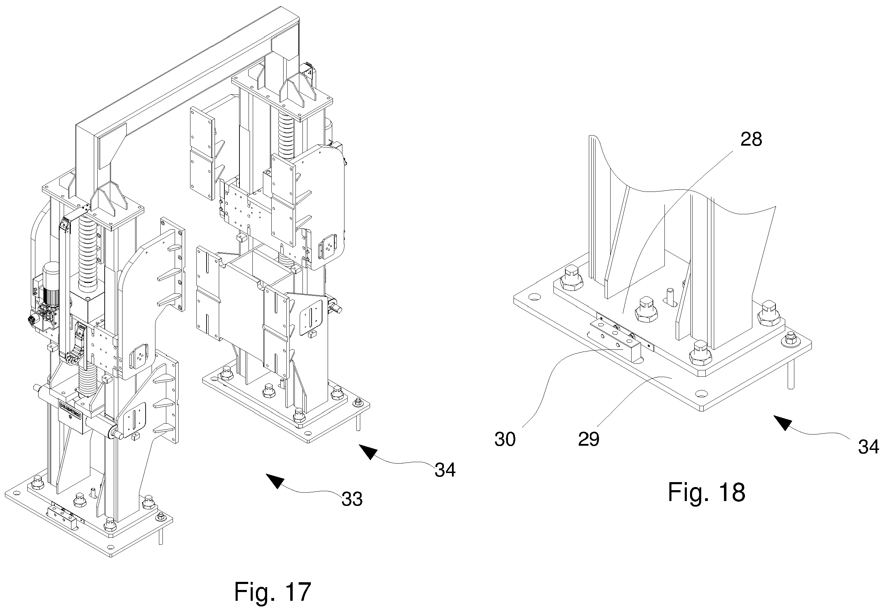

The free portal structure 33 can also rest on two longitudinally free support feet 34. In the embodiment illustrated in Figures 17 and 18, for each column, from the foundation plate 29 a sole arrest unit 30 protrudes, that is arranged, in use, facing an outer longitudinal edge of the plate-shaped body 28 so as to lock the movement of the support foot 34 along a horizontal direction that is transverse, in particular orthogonal, to the advancement direction X. Also in the free support structure 33, the two support feet 34 and the corresponding foundation plates 29 are configured in a specular manner on both the columns.

In other words, the free support feet 34 are provided with constraints that slide longitudinally that enable the support feet 34 to slide pushed by the dilation of the apparatus 1 with respect to the foundation plates 29.

The apparatus 1 comprises, in particular, dilation transducer means 35 configured to measure thermal dilation of the frame 4a, 4b (or of the pair of frames 4a, 4b) in the longitudinal direction X due to a temperature variation.

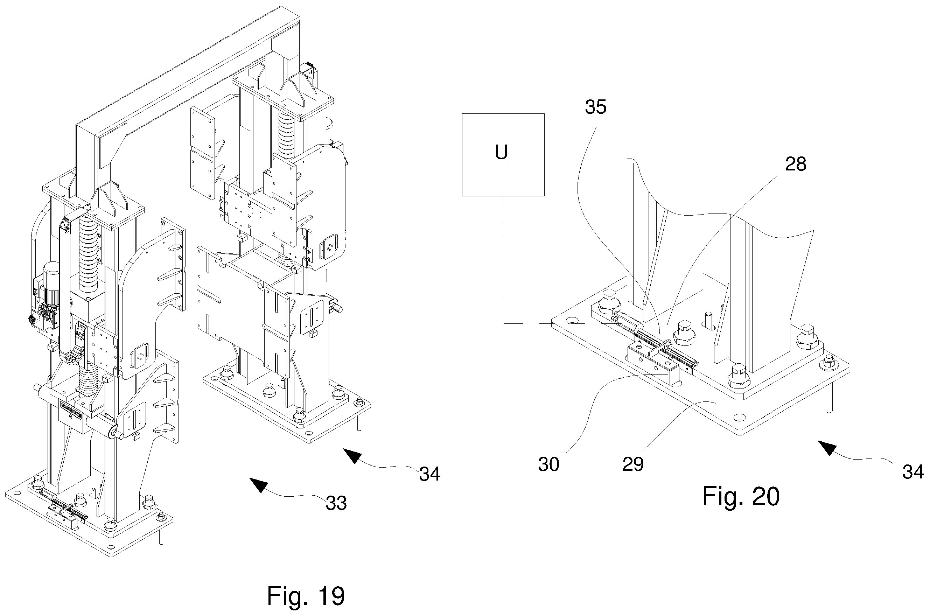

The dilation transducer means 35 is provided in the free portal structure 33, in particular at one or more free support feet 34. In the embodiment illustrated in Figures 19 and 20, the dilation transducer means 35 comprises at least one longitudinal movement transducer positioned on the support feet 34 to measure a longitudinal movement (along the longitudinal direction X) between the plate-shaped body 28 and the foundation plate 29. The dilation transducer means 35 is configured, in particular, to measure the dilation and send the dilation as a datum for acquiring (indirectly) the heating transitory of the apparatus 1. In this specific illustrated embodiment, the longitudinal movement transducer of the dilation transducer means 35 is connected at the arrest unit 30.

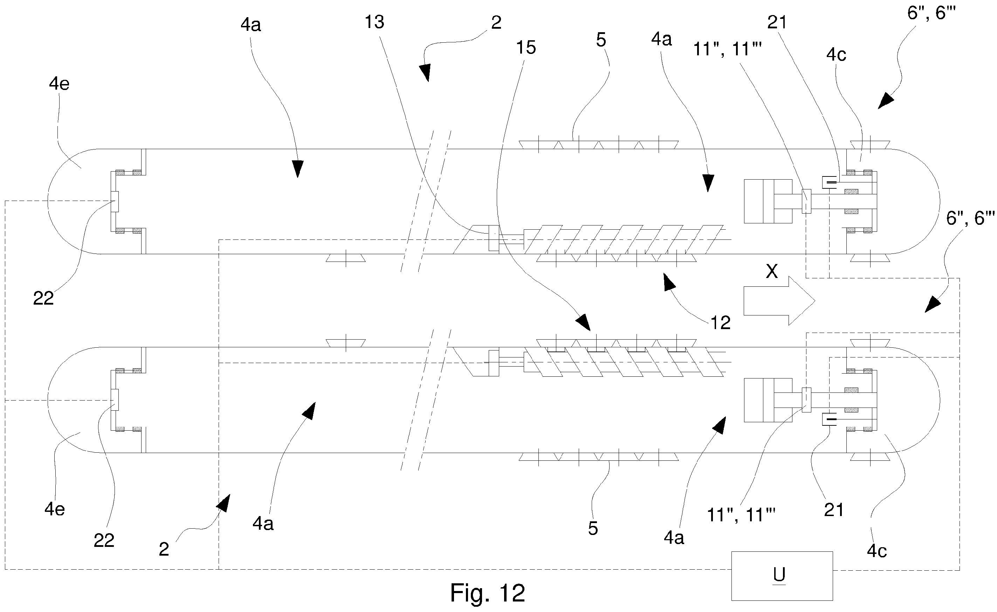

The device 6, 6', 6", 6"' comprises, in particular, longitudinal displacement transducer means 21 (Figure 12) configured, in particular, to detect a movement - measured parallel to the advancement direction X - between the frame 4a, 4b and respectively the first curved guide portion 4c and the second curved guide portion 4d.

The longitudinal displacement transducer means 21 is positioned between the guide structure 4a, 4b and respectively the first curved guide portion 4c and the second curved guide portion 4d. In particular, the longitudinal displacement transducer means 21 can be applied to the drive and thrust unit 7, 7', 7", 7"'.

The longitudinal displacement transducer means 21 can comprise a movement sensor of resistive or optical type.

The device 6, 6', 6", 6"' comprises, in particular, first force transducer means 11', 11", 11"' (Figures 7, 8, 9, 10 and 12) configured, in particular, to detect a tensioning force F_{T} of the conveyor belt 5 measured parallel to the advancement direction X. The first force transducer means 11', 11", 11"' is applied to the drive and thrust unit 7, 7', 7", 7"'. The first force transducer means 11', 11", 11"' can include one or more load cells.

In the second embodiment, the first force transducer means 11' is applied at the movable end (the stem of the pneumatic actuator) of the projectable unit 7' (Figure 7).

In a first variant on the third embodiment, the first force transducer means 11" provides a pair of force transducers 11a', 11b' (Figure 8) each of which is applied at the two movable ends (stems) of the pair of thrust actuators 7" (pneumatic cylinders).

In a second variant on the third embodiment, the first force transducer means 11" is applied (in a central position) between the device with two thrust actuators 7'' and the plate 8" (Figure 9).

In the fourth embodiment, the first force transducer means 11"' (Figure 10) is applied to the drive and thrust unit with a single actuator 7, 7', 7"' at the arm element 8d that transfers the thrust to the gear element 8a"'.

The device 6', 6", 6"' comprises, in particular, a control unit U (Figures 9, 10, 11, 12 and 20) configured, in particular, to receive signals coming from the first force transducer means 11', 11", 11'" and control in an open loop or through feedback the drive and thrust unit 7', 7", 7"' to preset, correct and maintain a preset tensioning force value F_{T}.

The apparatus 1 comprises, in particular, traction means 12, 15 (Figures 1, 11 and 12) provided for actuating the advancement of each conveyor belt 5.

In particular, in the embodiment of the apparatus 1 illustrated in the figures, upper traction means 12 can be provided for the upper conveyor belt 5, and lower traction means 15 for the lower conveyor belt 5.

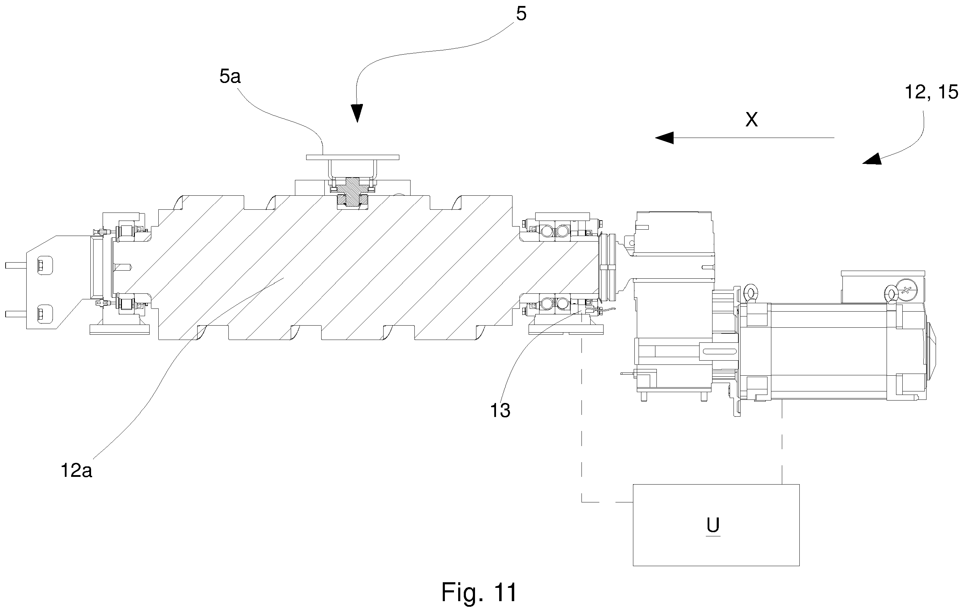

In this illustrated embodiment, the traction means 12, 15 each comprise a feed screw 12a (Figures 5 and 11) rotated by respective motor means, such as a respective reduction unit. This feed screw 12a can have a rectangular thread profile (taken on a median plane that passes through the axis of the screw). The traction means 12, 15 can be positioned inside the closed loop of the respective conveyor belts 5.

The rectangular profile of the feed screw 12a is shaped to engage a series of dragging pins provided with idling wheels or bearings, fixed to, and protruding from the conveying plates 5a (Figure 11). The dragging pins protrude towards the corresponding traction means 12, 15 near a transverse centre zone of each plate, thus enabling the greatest traction force to be distributed on several pins.

As mentioned, this feed screw 12a can be moved by a kinematic chain that connects the feed screw 12a to the reduction unit that can be placed inside the support structure of each conveyor belt 5 or outside, placed next to each conveyor belt (as in the illustrated embodiment). The reduction unit can be placed outside each conveyor belt 5 and motion can be transmitted by a multiple link chain or by toothed belts. Alternatively, motion can be transmitted by an articulated joint and a right-angle gear. In the illustrated embodiment, the traction means 12, 15 is fitted both to the upper conveyor belt 5 and to the lower conveyor belt 5 in a flat sliding zone arranged near one of the two end curved guide portions 4c, 4d and at the conveying zone in which the two conveyor belts 5 face one another. The traction means of the upper conveyor belt 5 and of the lower conveyor belt 5 are mechanically independent and the speed set for the corresponding feed screws can be synchronized by a control software of the respective electric motors of reduction gear. In this embodiment that is not illustrated, it is possible to distribute the traction forces between the upper conveyor belt 5 and the lower conveyor belt 5 measuring and controlling the torque transmitted by each electric motor. The greatest traction force can be imposed on the lower conveyor belt 5 in the conveying zone at the feed screw 12a.

In one embodiment that is not illustrated, as mentioned, the traction means can comprise a traction unit with end pinions. In this embodiment, two pinions are placed at the ends of the support structure and form two return curves of the conveyor belt; the two pinions are connected by a connecting shaft (so as to rotate together) and are moved by a further reduction unit driven by a further controlled-speed electric motor acting on one of the two pinions. The end pinions can be installed on both the upper conveyor belt and on the lower conveyor belt. The two traction units that serve the two end pinions are mechanically independent and the speed thereof can be synchronized by control software of the respective electric motors. In this embodiment that is not illustrated it is possible to distribute the traction forces between the upper conveyor belt 5 and the lower conveyor belt 5 by measuring controlling the torque transmitted by the further electric motor, the greatest traction force can be imposed on the lower conveyor belt 5.

As mentioned, the polyurethane resin is dispensed by the dispensing means that dispenses reactive mixture on the sheet metal or on the outer lower layer of the panel to be manufactured at the conveying zone, in particular in the inlet section to the double conveyor belt, and expands by chemical reaction to form a foam. By expanding between the two conveyor belts 5, the foam develops a pressure that is transmitted to the coating layer and then to the surfaces facing the conveyor belt 5. The weight of the conveying plates 5a of the conveyor belt and the thrust of the foam cause friction forces to be overcome to enable the wheels or bearings of each conveying plate 5a to run and determine the size of the greatest traction force that has to be imposed on each conveyor belt 5 to move each conveyor belt 5.

In addition or alternatively to the first force transducer means 11', 11", 11"', the device 6, 6', 6", 6"' can comprise second force transducer means 13 (Figure 11) that is configured, in particular, to detect a traction force F_{TS} acting on traction means 12, 15 of the apparatus 1 suitable for moving the respective conveyor belt 5. The second force transducer means 13 can include one or more load cells.

The control unit U can be further configured to receive further signals from the second force transducer means 13 and correlate the further signals with the preset tensioning force value F_{T}; this is in order to set, correct and maintain a preset value of the tensioning force F_{T}.

The speed of the conveyor belt 5 is set and is a parameter linked to the panel production process. The control unit U is configured, in particular, to differentiate the traction forces and, where necessary, to also differentiate the speed of the two conveyor belts 5 so as to prevent the panel getting bent upon leaving the double conveyor belt 5, in particular getting bent downwards because of the different amounts of the thrust arising from the cutting forces in a longitudinal direction that the foam exerts along the thickness of the panel.

In particular, the aforesaid control unit U can be operationally connected both to the first force transducer means 11', 11", 11"' and to the second force transducer means 13 to command and control in a correlated manner the traction means 12, 15 and synchronize the speeds of the two conveyor belts 5 with a possible speed difference and to command and control the respective devices 6, 6', 6", 6"' (applied to the lower and upper conveyor belt 5) so as to correlate the tensioning forces between the upper conveyor belt and the lower conveyor belt to prevent lack of tensioning from occurring that would cause misalignments of the conveying plates 5a and undesired distortions of the panel and to thus avoid undesired surface deformation of and/or curving effects on the panel being manufactured. In other words, it is possible to control the upper and lower conveyor belts 5 so as to have: reference speed values that are equal (or comprised in a differentiation range); a difference of the presettable greatest traction force suitable for preventing the occurrence at the outlet of the double conveyor belt of longitudinal curvature of the panel, caused by the difference of the thrust resulting from the expansion pressure of the foam and by the cutting forces that occur in a longitudinal direction, in particular in the case of panels that are more than 40 mm thick, between the foam in contact with and near the containing surface of the outer lower layer and the foam in contact with and near the containing surface of the outer upper layer; and a suitable tensioning force so as to prevent the different traction forces of the upper and lower conveyor belt being able to cause a misalignment of the conveying plates 5a of each conveyor belt 5 due to a lack of suitable tensioning and thus prevent undesired deformations of and/or curving effects on the panel being manufactured.

The control unit U, together with the provision of a pair of devices 6, 6', 6", 6" for the two conveyor belts 5, performs a control action that ensures that downstream of the traction means 12, 15 (with respect to the longitudinal direction X), each conveyor belt 5 is always tensioned. In fact, if because of dilation or settling or lack of tensioning one of the two conveyor belts 5 is pushed by the traction screw, silent compression would occur of adjacent conveying plates/tiles 5a that could cause detachment of the respective guide rails/tracks. In other words, the traction means 12, 15 are configured to pull the conveying plates 5a without ever pushing the plates 5a against one another to prevent the plates 5a lifting up from the respective guide rails even in the presence of disturbances (arising for example from dirt, thermal dilation, settling of the connections between the plates of the conveyor belts, gluing of the foam).

The correlation between the tensioning forces is achieved by setting equal tensioning between the two conveyor belts 5 (or by varying tensioning by the same amount on the upper conveyor belt 5 and on the lower conveyor belt 5). Nevertheless, there is provided to arrange a greater tensioning force acting on the lower conveyor belt 5 to allow for the greater load resulting from the weight of the panel (and from the weight of the two belts) and thus the greater revolving friction forces that weighs on the single conveying plates 5a of the lower conveyor belt 5 and, additionally, the pressure force (that affect both conveyor belts equally). The synchronization of the speeds and the correlation of the tensioning forces is a first (and basic) method of controlling the devices 6, 6', 6", 6"'. It is possible, according to the first control method (which does not involve using force transducer means), to set a (relatively small) speed difference between the two conveyor belts 5. This speed difference induces a cutting force in the foam that is not yet completely consolidated between the upper surface of the panel and the lower surface of the panel. The cutting force generates laminar cutting in the foam and offsets possible curving of the panel linked to the different density of the foam along the thickness of the foam.

In an apparatus provided with traction force transducer means it is nevertheless preferable to set a greater traction difference and, if it is not sufficient, and also set the speed difference on the lower conveyor belt 5 to avoid longitudinal curves of the panel downwards that may cause obstacles on roller conveyors (which are not illustrated) placed at the outlet of the double conveyor belt.

A second level of control of the devices 6, 6', 6", 6"' also detects the traction forces directly by load cells installed on the dragging screw (as in the illustrated embodiments). Also in this case, the synchronized speeds of the two conveyor belts and correlated tensioning forces are set by the control unit U. For this second control (and monitoring) method, direct measuring of the traction forces also enables it to be calculated how much the traction force difference is due to the friction forces on the two conveyor belts and how much to the other forces arising from disturbances (e.g. from dirt, thermal dilation, gluing of the foam).

It is thus possible, by the control unit U, to set tensioning forces that are different and act so as to compensate, with respect to the set desired tensioning, for all the listed disturbances and also the differential dilation of the support structures 4 that require the preload to be adjusted.

In other words, it is possible (in an apparatus devoid of force transducer means on the traction means), to control the upper and lower conveyor belt 5 units by the control unit U so as to have: reference speed values that are the same and the possibility of adding a speed difference to offset tendencies of the panel to bend. In an apparatus provided with force transducer means on the traction means, finer adjustment of the simple speed difference is possible, in particular, by controlling a difference of the greatest traction force by avoiding further possible sliding between the conveying plates of the conveyor belt 5 and the surface of the differential panel of the traction force and thus prevent longitudinal curvature the panel exiting the double conveyor belt 5.

The longitudinal curvature of the panel can be caused by the difference of the thrust arising from the expansion pressure of the foam and by the cutting forces that occur in a longitudinal direction, in particular if the panel is thicker than 40 mm, between the foam in contact with and near the containing surface of the outer lower layer and the foam in contact with and near the coating (and containing) surface of the outer upper layer; and a suitable tensioning force so as to prevent distinct traction forces between the upper and lower conveyor belt being able to cause jerking movements or misalignment of the conveying plates 5a of each conveyor belt 5 due to a lack of appropriate tensioning and thus undesired deformation of and/or curving effects on the panel being manufactured.

As mentioned, each of the support structures 4 can comprise a third curved guide portion 4e and a fourth curved guide portion 4f opposite the first curved guide portion 4c and the second curved guide portion 4d respectively. Third force transducer means 22 configured, in particular, to detect an adjustable and presettable longitudinal tensioning force acting on the conveyor belt 5 (in particular, on the curved head opposite the head where the drive and thrust unit is arranged) can be interposed between the frame 4a, 4b and either between the third curved guide portion 4e and the fourth curved guide portion 4f.

In other words, the third force transducer means 22 can be positioned on the end opposite the support structure 4 in which the device 6, 6', 6", 6"' is provided. The third force transducer means 22 can include one or more load cells.

In particular, the curved guide and return guide portions 4c, 4d are positioned at the inlet of the panel in the double belt so that there are no heads that are longitudinally movable in this section to prevent such a possible movement causing unexpected deformation or strain problems for the strips (or flexible coating belts) that form outer covering layers of the panel, which could get damaged and tear with great harm to the production process.

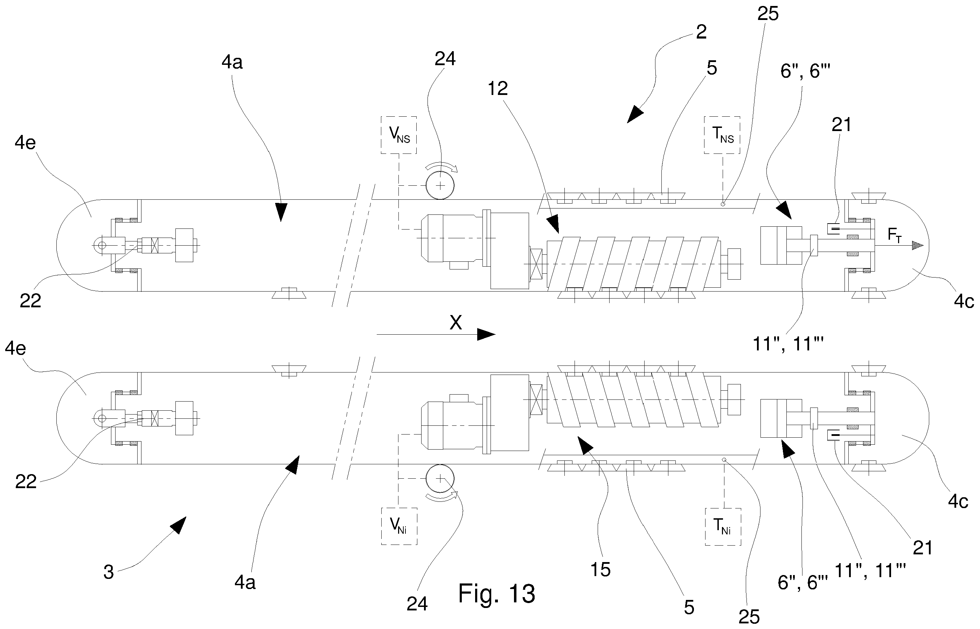

The apparatus 1 can further comprise speed detecting means 24 (Figure 13) suitable for measuring a running speed for each conveyor belt 5. The speed detecting means 24 can be applied to the traction means 12, 15 or directly to the conveyor belt 5 (for example by a measuring wheel) to detect a running speed of each conveyor belt 5.

The apparatus 1 can further comprise temperature detecting means 25 (Figure 13) applied to at least one section of the frame 4a, 4b of each conveyor belt 5 to detect the temperature (in particular of the air) at this section. Additionally or alternatively, it is possible to provide temperature detecting means 25 that is suitable for detecting directly the temperature of the inner surface of the plates of the conveyor belt in at least one section for each conveyor belt 5. The temperature detecting means 25 can be positioned at the guide rails 14a, 14b on which the conveying plates of the conveyor belt 5 run.

The control unit U can be configured to set reference speed values for the two upper and lower conveyor belts 5 and differentiation thereof, traction force F_{TS} value differences between the two conveyor belts 5, benchmark tensioning force values F_{T} applied to the tensioning devices of the two upper and lower conveyor belts 5 and differentiation thereof. The control and command unit U can be further configured to set temperature values for the sections of the two upper and lower conveyor belts 5.

The control unit U can be configured, in particular, to compare the dilation detected by the dilation detecting means 35 with the temperature detected by the temperature detecting means 25.

The control unit U can be configured, in particular, to compare the dilation detected by the dilation detecting means 35 with the corresponding movement detected by the longitudinal displacement transducer means 21.

The control unit U can be further configured, in particular, to receive, sample and store for each conveyor belt 5 signals coming from the speed detecting means 24.

The control unit U is configured, in particular, to sample the signals coming from the first force transducer means 11', 11", 11"' (to measure tensioning) and/or the second force transducer means 13 (to measure the traction force) and/or the third force transducer means 22 and/or the displacement transducer means 21 in one or more sampling ranges.

Sampling is conducted continuously and stored according to digital sampling means by specific software that compares said sampled values with recursion, in particular for a series of sampling ranges each of which can be comprised between 30 and 200 seconds in duration, and compares one or more average values (force or movement) determined on the basis of one or more ranges with the aforesaid preset limit values.

The control unit U can be further configured to compare, for each conveyor belt 5, a tensioning force F_{T} variation detected and a speed difference detected with respective preset limit values and to report for each conveyor belt 5, the possible overcoming of one or more of these preset limit values and perform a diagnosis of modification of speed and tensioning settings of the respective conveyor belt 5 by the respective traction means 12, 15.

The apparatus 1 can further comprise a user graphic interface (GUI) to display the signals (coming from the first force transducer means 11', 11", 11"' and/or from the second force transducer means 13 and/or from the third force transducer means 22 and/or from the longitudinal displacement transducer means 21) digitally or graphically according to the time and to compare, for each conveyor belt 5, a detected traction force F_{TS} variation, a detected tensioning force F_{T} variation and a movement detected with respective preset limit values, and to report for each conveyor belt 5, any exceeding of one or more of these preset limit values and to perform a preventive maintenance diagnosis.

In addition or alternatively, the graphic interface can be configured to show the signals detected by the first, second and third force transducer means and by the longitudinal displacement transducer means, according to the time (by way of non-limiting example: the detected traction force F_{TS} signals and traction force F_{TS} difference signals of the two conveyor belts 5, speed and speed difference signals of the two conveyor belts 5), so as to show an operator the effect of speed on the traction forces and of the traction difference on the speed difference.

In addition or alternatively, the graphic interface can be configured to show the signals detected by the first, second and third force transducer means and by the longitudinal displacement transducer means, according to the temperature detected by the temperature detecting means 25, so as to show an operator the effect of dilation and of the corresponding support structure 4 on the tensioning force F_{T} and on the greatest traction force F_{TS}.

In addition or alternatively, the graphic interface can be configured to show the signals detected by the first, second and third force transducer means and by the longitudinal displacement transducer means, in function of the speed of each conveyor belt. The control unit U can be configured to calculate and supply at the outlet (available for the operators) in digital or graphic form, according to the time, the forces that act in the apparatus 1, in particular along each conveyor belt 5 (Figure 12).

In particular, the following parameters can be identified in the apparatus:
- F_{T} =: tensioning force measured at the drive and thrust unit 7, 7', 7", 7"' by the force transducer means 11', 11'', 11''';
- F_{T}/2 =: tensioning force of the longitudinal tensioning force on the upper and lower branches of the conveyor belt 5;
- N₀ =: periodic disturbance detected in the longitudinal tensioning force;
- F_{B} =: rolling and friction force acting on the return branch of the conveyor belt 5;
- V_{NS} =: speed measured by speed detecting means in contact with the return surface of the conveyor belt 5;
- T_{NS} =: temperature measured in at least one section of the frame 4a, 4b of the conveyor belt 5;
- F_{TS} =: traction force measured at the traction means 12, 15;
- N₁ =: periodic disturbance detected in the traction force;
- F_{PB} =: rolling friction and dragging force of the panel acting on the conveyor belt 5 at the conveying zone of the panel;
- F_{C} =: further tensioning force measured by the third force transducer means 22;
- N₂ =: periodic disturbance measured by the third force transducer means 22;
- V_{NS} =: detected speed of the upper conveyor belt 5;
- V_{Ni} =: detected speed of the lower conveyor belt 5;
- T_{NS} =: detected temperature of the upper conveyor belt 5;
- T_{Ni} =: detected temperature of the lower conveyor belt 5;
- Y_{TS} =: movement (stroke) of the drive and thrust unit.

Further, the following parameters can be calculated (by the control unit U):
F_{B} = F_{C} - F_{TS} + F_{PB}, F_{PB} = F_{TS} - F_{T/2}.

The friction forces F_{PB} give the measure of the force exerted on the surfaces of the conveyor belt 5 to contain the panel and can be freed of the rolling and attrition force F_{B} (and thus be correlated with the expansion pressure of the foam).

The parameters F_{B} and F_{PB} (once digitalized and provided digitally or graphically) provide information on the thrust that the foam exerts on the two conveyor belts 5 in the conveying zone and on possible setting faults of the speed, temperature and differentiated traction force F_{TS} parameters, which faults can give rise to defects in the panel like for example curvature at the outlet or poor adhesion of the foam to the cover surfaces.

The friction forces and the periodic disturbance N₀ (once digitalized) can be analyzed according to frequency, for example by processing the signals by the digital Fourier transform. Depending on the size of peaks thereof and the period thereof compared with the speed of the conveyor belt 5, the friction forces and the periodic disturbance N₀ provide information on possible problems of dirt that has accumulated on the single conveying plates of the conveyor belt and/or rolling problems.

Also the friction forces and the periodic disturbance N₂ (once digitalized) can be analyzed according to frequency, for example, by processing the signals by digital Fourier transform. Depending on the size of the peaks thereof and the period thereof compared with the speed of each conveyor belt, the friction forces and the periodic disturbance N₂ provide information on possible problems of movement and sliding of the conveying plates in contact with the surfaces of the panel and/or rolling problems.

The periodic disturbance N₁ detected on the transducer (second force detecting means 13) applied to the traction means 12, 15 of each conveyor belt 5 (once digitalized) can be analyzed according to frequency, for example, by processing the signals by the digital Fourier transform. Depending on the size of the peaks thereof and of the period thereof compared with the rotation speed of the traction means 12, 15 of each conveyor belt 5, the value of the periodic disturbance N₁ provides information about possible movement problems of the traction means 12, 15 and/or meshing with the pitch of the feed screw 12a.

The graphic interface can be configured to show (graphically) the signals detected by the first, second and third force transducer means and by the longitudinal displacement transducer means, depending on the frequency (by processing the signals by the Fourier transform) so as to facilitate the recognition - by an operator - of irregular operating peaks (for example, force peaks) and thus permit a preventive maintenance diagnosis.

The graphic shape shown by the graphic interface can include a comparison of the period of selected peaks with the speed of the conveyor belt 5 or of the traction means 12, 15 so as to show the pitch thereof to thus enable the element to be identified that causes the peak under examination in the frequency field.

The graphic interface can be configured to show (in graphic or digital form), for the lower conveying unit 3, the data detected by the dilation detecting means 35 that indicate the dilation of the support structure 4 of the apparatus 1 with respect to the foundations 29 (foundation plates) of the apparatus 1, the data detected by the position transducer means 21 that indicate the corresponding movement between the frame 4a, 4b and the first and second curved guide portion 4c, 4d, and the data detected by the temperature detecting means 25 that indicate the temperature of the conveyor belt 5.

The detected and displayed data relating to a thermal transient of the apparatus 1 can show that the apparatus 1 is moving towards the thermal regime, this occurs in particular when the dilation ratio Δs/Δt becomes less over time than a set threshold.

A dilation trend over time characterized by step peaks and discontinuity indicates that a fault has occurred or that there is an obstacle.

A method is disclosed below for actuating, controlling and monitoring the state of tensioning and traction of an apparatus 1 for the continuous production of a panel.

The method thus comprises using the apparatus 1 provided with a pair of support structures 4, each of which supports a moving closed-loop conveyor belt 5 suitable for contacting a respective outer surface of the panel to drag the panel along the advancement direction X.

The production method further involves, for each support structure 4, activating the drive and thrust unit 7, 7', 7", 7"' to move a first curved guide and return portion 4c with respect to the frame 4a, 4b and transmit (synchronously) the movement of the first curved guide and return portion 4c to the second curved guide and return portion 4d so that a movement of the first curved guide and return portion 4c is matched by an identical movement of the second curved guide and return portion 4d.

Further, there is a step of setting a tensioning force F_{T} (or the further tensioning force F_{C}) acting on the conveyor belt 5. This setting is set either by a passive mechanical device (like the drive and thrust unit indicated by reference 7) and/or by an active actuating device (like the drive and thrust unit indicated by one of references 7',7", 7'").

The particular configuration of the device 6, 6', 6", 6"', in particular through the coupling and transmission unit 9, ensures the same movement along the advancement direction X of the panel of both the first curved guide and return portion 4c and the second curved guide and return portion 4d with respect to the frame 4a, 4b, synchronizing the movement thereof and applying uniform tensioning to the conveyor belt 5 (in all sections thereof).

A setting step can also be provided with detection of a tensioning force F_{T} (or of the further tensioning force F_{C}) acting on the conveyor belt 5 and a feedback control step for controlling the drive and thrust unit 7', 7", 7"' to reach and maintain a preset tensioning force value.

As disclosed above, this tensioning force F_{T} (or the further tensioning force F_{C}) is measured at at least one of the curved guide portions of at least one of the two conveyor belts 5.

Applying the first force transducer means 11', 11",11"' (load cells) to the drive and thrust unit 7', 7", 7"' enables the tensioning thrust applied to conveyor belts 5 to be detected, monitored, controlled and adjusted through continuous feedback.

There can also be a step of detecting the traction force F_{TS} acting on the traction means 12, 15 that is controlled with the same speed reference and a traction force difference F_{TS} acting on the traction means 12, 15 of one of the conveyor belts 5 with respect to the other to control the longitudinal curvature of the panel outside the double conveyor belt arising from the polymerization differences of the layer of foam is commanded in a correlated manner.

The method further involves differentiating the forces F_{PB} that act on the upper outer coating layer of the panel from the homologous ones that act on the lower outer coating layer by acting on the control of the respective drive and thrust units according to preset threshold values to compensate with these differences for the tendency of the panel to bend longitudinally ("banana effect") because of the variation in density of the foam along the thickness of the panel, by thus providing a solution that is able to ensure the production of a panel that has high quality standards, in particular of a product that is free of curving faults. In order to obtain and accentuate the same control effect on the on the longitudinal curvature of the exiting panel, in addition to the traction force difference it is possible to control in a closed loop a speed difference on the traction means 12, 15 of one of the conveyor belts 5.

The method further enables the rolling and attrition force F_{B} to be calculated that affects the return part of the conveyor belt 5 and the rolling and attrition force F_{PB} that depends on the thrust exerted on the conveyor belts 5 in the conveying zone of the panel by the foam generated by the mixture of reagent resin. The indirect measurement of the forces F_{B} and F_{PB} further enables the effect of the thrust of the expanded foam on the conveyor belts 5 to be monitored (indirectly) so as to assess the impact of this thrust on correctly controlling the force imposed by the traction means 12, 15.

A correlated control is further provided of the longitudinal tensioning force F_{T} exerted by the drive and thrust unit 7', 7", 7"' in function of the greatest traction force F_{TS} acting on the traction means 12, 15 of the apparatus 1 and of the further tensioning force F_{C} acting on the curved guide portion (third curved guide portion 4e and/or fourth curved guide portion 4f) opposite the device 6, 6', 6", 6"' such that the longitudinal tensioning force F_{T} generates, during operation, a further tensioning force F_{C} value that is greater than a set threshold value that ensures correct tensioning of the conveyor belt along the entire extent thereof. The further tensioning force F_{C} that is affected by the rolling and friction forces F_{B} and F_{PB} (the force F_{PB}, as disclosed, depends on the thrust exerted on the conveyor belts 5 by the foam generated by the mixture of reagent resin).

In the case of pre-programmed or preset tensioning without feedback control of the longitudinal tensioning force F_{T}, the method can comprise detecting one or more approximate tensioning values of each of the conveyor belts 5 and a comparison step, for each conveyor belt 5, of a variation of one or more forces detected with the reporting of a possible exceeding or one or more preset tensioning limit values. There is provided for implementing a modifications diagnosis of the tensioning settings of the respective conveyor belt 5.

One or more conveyor belt 5 speed values can be further detected and for each conveyor belt 5 a detected speed difference can be compared with respective preset speed limit values and then possible exceeding of one or more of the preset speed limit values can be reported for each conveyor belt 5, and then a modification diagnosis of the speed settings of the respective conveyor belt 5 can be conducted.

Further, the signals can be displayed digitally or graphically according to time and/or frequency and for each conveyor belt 5, signals (or average values of the signals) corresponding to the force values F_{TS}, F_{T}, F_{B}, F_{C}, F_{PB}, can be compared with preset limit values and the reporting for each conveyor belt 5, of the possible exceeding of one or more of the preset limit values and then a preventive maintenance diagnosis can be conducted.

Further, the further displacement transducer means 21 enables the extent of elongation of each conveyor belt 5 over time (arising from the settling of the joints between one plate of the conveyor belt and the next) to be detected and supplied (digitally or graphically) and the periodic movements arising from the transit of each conveying plate 5a on the curved guide and return portions to be detected and supplied (digitally or graphically).

Further, providing dilation transducer means 35 and displacement transducer means 21 enables the corresponding elongation difference of the conveyor belt 5 (measured by the displacement transducer means 21) with respect to the dilation of the support structure 4 (measured by the dilation transducer means 35) over time to be detected and supplied (digitally or graphically) to detect possible exceeding of elongation threshold values and/or exceeding of threshold values of the longitudinal tensioning force F_{T}.

Detecting the loads on the drive and thrust unit 7', 7", 7"' and on the traction means 12, 15 further enables traction energy to be saved and mechanical wear to the conveyor belts 5 to be reduced by minimizing the tensioning setting necessary to maintain a set speed of the conveyor belt 5 so as not to unnecessarily increase the load on the motor of the traction means 12, 15 of each conveyor belt 5.

## Claims

1. Apparatus (1) for the continuous production of a panel, comprising an upper conveyor belt (5) and a lower conveyor belt (5), of the closed loop type, suitable for contacting a respective outer surface of said panel to be dragged along an advancement direction (X), said upper conveyor belt (5) and said lower conveyor belt (5) each being movable around a respective support structure (4) which comprises a frame (4a, 4b) supported by portal structures (26, 33) suitable for resting on respective foundations (29), and a pair of curved guide and return portions (4c, 4d) for the respective conveyor belt (5), said curved guide and return portions (4c, 4d) being arranged at an end of the respective frame (4a, 4b) and being movable, and displaceable in a synchronous manner relatively to the respective frame (4a, 4b), wherein said apparatus (1) comprises at least one device (6; 6'; 6"; 6"') for actuating, controlling and monitoring the state of tensioning and traction of each conveyor belt (5), said device (6; 6'; 6"; 6"') comprising, for each of said support structures (4), at least one drive and thrust unit (7; 7'; 7"; 7"') configured to apply an adjustable and presettable longitudinal tensioning force (F_{T}), parallel to said advancement direction (X), and synchronously position the conjugated curved guide and return portions (4c, 4d) of each pair of curved portions (4c, 4d), **characterized in that** said pair of curved guide and return portions (4c, 4d) comprises a first curved guide and return portion (4c) and a second curved guide and return portion (4d) for the respective conveyor belt (5); wherein said drive and thrust unit (7; 7'; 7"; 7"') is connected to said end of the respective frame (4a, 4b) and to a transmission assembly (23) for transmitting a movement of said first curved guide and return portion (4c) to said second curved guide and return portion (4d); and wherein said transmission assembly (23) comprises a connection unit (8; 8") and a coupling and transmission unit (9), said connection unit (8; 8") being synchronously and movably coupled with the respective first curved guide and return portion (4c), to each connection unit (8; 8") there being connected said coupling and transmission unit (9) configured to transmit, upon a translation of said connection unit (8; 8"), an identical longitudinal translation and a fraction of said longitudinal force (F_{T}) to the respective second curved guide and return portion (4d) so that to a displacement of the first curved guide and return portion (4c) there corresponds an equal displacement of the respective second curved guide and return portion (4d).

2. Apparatus (1) according to claim 1, comprising, for each of said upper conveyor belt (5) and lower conveyor belt (5), at least a pair of devices (6; 6'; 6"; 6"') for actuating, controlling and monitoring the state of tensioning of the respective conveyor belts (5).

3. Apparatus (1) according to claim 1 or 2, wherein each frame (4a, 4b) comprises, on opposite and parallel longitudinal sides, a first support side (4a) and a second support side (4b), said first support side (4a) and said second support side (4b) each being provided with respective longitudinal guide rails (14a, 14b) to interact with wheels for sliding and guiding the respective conveyor belt (5); and wherein said first support side (4a) is slidably coupled, parallel to said advancement direction (X), with said first curved guide and return portion (4c) and said second support guide (4b) is slidably coupled, parallel to said advancement direction (X), with said second curved guide and return portion (4d).

4. Apparatus (1) according to claim 2 or 3, wherein said transmission assembly (23) comprises a further connection unit (10) coupled to, and movable with, each second curved guide and return portion (4d), said further connection unit (10) being connected to the respective connection unit (8; 8") by means of the respective coupling and transmission unit (9); and wherein each connection unit (8; 8") comprises a support arm (8d; 8d") carrying a gear element (8a; 8a'; 8a"; 8a"') configured to mesh a respective stationary rack element (8b; 8b'; 8b"; 8b"') which is fixed to an end area of said first support side (4a); and wherein said further connection unit (10) comprises a further gear element (10a) configured to mesh a further stationary rack element (10b) which is fixed to an end area of said second support side (4b); and wherein said support arm (8d; 8d") is slidably coupled to a linear guide element fixed to said first side (4a) to guide the respective gear element (8a; 8a'; 8a"; 8a"'); and comprising one or more slider members (19, 20) configured to support and slidably connect - parallel to said advancement direction (X) - said first curved guide and return portion (4c) and said second curved guide and return portion (4d) to said frame (4a, 4b).

5. Apparatus (1) according to any one of claims 2 to 4, wherein said coupling and transmission unit comprises a transmission shaft (9) rotatable around a rotation axis transverse to said advancement direction (X) and to whose opposite ends there are mounted said gear element (8a; 8a'; 8a"; 8a"') and said further gear element (10a) respectively, said gear element (8a; 8a'; 8a"; 8a"') and said further gear element (10a) being rotatably integrally joined with said transmission shaft (9), said transmission shaft (9) being mounted in a free rotary manner on said first curved guide and return portion (4c) and on said second curved guide and return portion (4d) by means of respective support bearings (9c, 9d) so that to a roto-translational movement of said gear element (8a; 8a'; 8a"; 8a"') there corresponds an equal roto-translational movement of said further gear element (10a) so as to evenly distribute the longitudinal tensioning movement and a fraction of said longitudinal tensioning force (F_{T}) applied by said drive and thrust group (7; 7'; 7"; 7‴) on both said first curved guide and return portion (4c) and said second curved guide and return portion (4d).

6. Apparatus (1) according to claim 2, or according to any one of the preceding claims 3 to 5 as appended to claim 2, wherein said drive and thrust group (7; 7'; 7"; 7"') comprises at least one projectable unit (7a; 7a', 7b'; 7a", 7b"; 7a"') configured to exert - parallel to said advancement direction (X) - said longitudinal tensioning force (F_{T}) on said transmission assembly (23) for tensioning said conveyor belt (5).

7. Apparatus (1) for the continuous production of a panel according to claim 7, wherein said at least one projectable unit comprises at least one pneumatic actuator (7b'; 7a", 7b"), said longitudinal tensioning force (F_{T}) comprising a presettable pneumatic force controlled by setting a pneumatic pressure.

8. Apparatus (1) according to claim 7 as claim 6 depends on claim 4 or on claim 5 when dependent on claim 4, wherein said support arm (8d") is rigidly connected to a platelike body (8"), to said support arm (8d") there being connected at least two pneumatic actuators (7a", 7b") symmetrically mutually positioned with respect to an axis of said support arm (8d").

9. Apparatus (1) according to one of claims 6 to 8, wherein said projectable unit comprises at least one elastic element (7a"'), said longitudinal tensioning force (F_{T}) comprising an elastic force and controlled by means of a preload applied to said elastic element (7a") installed on said projectable unit; and wherein said drive and thrust group (7") comprises a tensioning adjustment device (7b"') operatively couplable with said elastic element (7a"), and configured to allow a displacement parallel to said advancement direction (X) of a body (7c"') for supporting and guiding said at least one elastic element (7a"') to compress or decompress said at least one elastic element (7a"') varying the preload thereof and therefore the thrust that can be exerted on said transmission assembly (23).

10. Apparatus (1) according to one of claims 6 to 9, wherein said projectable unit (7') is provided - at a free end thereof - with a movable rack portion (7a') configured to be engaged with said gear element (8a'), said rack portion (7a') being arranged to act on said gear element (8a') in a diametrically opposite area with respect to said stationary rack element (8b') to duplicate the tensioning force (F_{T}) exerted by said projectable unit (7').

11. Method for performing, controlling and monitoring the state of tensioning and traction of an apparatus (1) for the continuous production of a panel comprising the steps of:
- providing said apparatus (1) with an upper conveyor belt (5) and a lower conveyor belt (5), of the closed loop type, suitable for contacting a respective outer surface of said panel to be driven along an advancement direction (X), said upper conveyor belt (5) and said lower conveyor belt (5) each being movable around a respective support structure (4) which comprises a frame (4a, 4b) supported by a portal structures (26, 33) suitable for resting on respective foundations (29), and a pair of curved guide and return portions (4c, 4d) for the respective conveyor belt (5), said curved guide and return portions (4c, 4d) being arranged at an end of the respective frame (4a, 4b) and being movable, and synchronously displaceable relatively to the respective frame (4a, 4b),
- monitoring the state of tensioning and traction for each conveyor belt (55) and, based on said monitoring, apply - for each pair of guides and return curved portions (4c, 4d) - a longitudinal tensioning force (F_{T}) which is adjustable and presettable parallel to said advancement direction (X) and synchronously position the conjugated curved guide and return portions (4c, 4d) of each pair of curved portions (4c, 4d), **characterized in that** there is provided for the transmission of the movement of a first curved portion (4c) of said pair of curved portions (4c, 4d) to a second curved portion (4d) of said curved portions (4c, 4d) so that to one displacement of said first curved portion (4c) there corresponds an equal displacement of said second curved portion (4d); and wherein there is provided for activating at least one drive and thrust group (7; 7'; 7"; 7"') to move said first curved portion (4c).

12. Method according to claim 11, wherein there is provided for, by means of a control unit (U), a step of detecting and monitoring a tensioning force (F_{T}) and a further tensioning force (F_{C}) acting on said conveyor belt (5) and controlling said drive and thrust group (7'; 7"; 7"') to define a pre-established tensioning force (F_{T}) value in an open adjustment loop according to preset tensioning force (F_{T}) values or control in feedback said drive and thrust group (7'; 7"; 7"') to maintain a pre-established tensioning force (F_{T})value; and wherein there is also provided for a step of providing in digital or graphic form said tensioning force (F_{T}) and/or said further tensioning force (F_{C}) as a function of time.

13. Method according to claim 12, wherein, by means of said control unit (U), a step of controlling in a correlated manner the velocities of traction means (12, 15) suitable for moving a respective conveyor belt (5), a step of detecting a force acting on said traction means (12, 15), a step of detecting a tensioning force (F_{T}) and controlling in feedback said drive and thrust group (7'; 7"; 7"'), and a step of detecting an opposite tensioning force (F_{C}) acting on a side of said frame (4a, 4b) opposite to the side in which there is applied the tensioning force (F_{T}) and control in a correlated manner in feedback said drive and thrust group (7'; 7"; 7"') and the force acting on said traction means (12, 15) of said apparatus (1) so that said tensioning force (F_{T}) generates, during the operation, a value of a further opposite tensioning force (F_{C}) which is comprised within a tolerance range set to guarantee an even tensioning of the conveyor belt (5) in the entire loop-like extension thereof; and wherein there is provided for a step of making available in digital or graphic form said velocities and said tensioning force (F_{T}) and/or said further tensioning force (F_{C}) as a function of time.

14. Method according to claim 13, wherein there is provided for, by means of said control unit (U), a step of setting and detecting a velocity difference of said conveyor belts (5) to control in a correlated manner said traction means (12) associated with said upper conveyor belt (5) and said traction means (15) associated with said lower conveyor belt (5) and the respective drive and thrust group (7'; 7"; 7"') so as to maintain a velocity difference between the two conveyor belts (5) within a tolerance range and avoid unwanted slipping of the conveyor belts (5) and/or a damage on substrates or on the surfaces of said panel being produced; and wherein there is provided for a step of making available in digital or graphic form said velocities and said velocity difference, said tensioning force (F_{T}) and/or said further tensioning force (F_{C}) as a function of time.

15. Method according to one of claims 14, comprising the steps of dispensing a reactive mixture to form an inner foam layer between the two substrates or coating surfaces of said panel and monitoring the thrust effect of the foam on said conveyor belts (5) and controlling- in a correlated manner both said traction means (12) associated with said upper conveyor belt (5) and the respective drive and thrust group (7'; 7"; 7"') and said traction means (15) associated with said lower conveyor belt (5) and the respective drive and thrust group (7'; 7"; 7"'), wherein by the step of detecting the force acting on said traction means (12, 15), and/or by the step of detecting the tensioning force (F_{T}), and/or by the step of detecting the opposite tensioning force (F_{C}), the thrust that the foam exerts on said conveyor belts (5) is indirectly measurable.

16. Method according to one of claims 12 to 15, wherein there is provided for, by means of said control unit (U), a step of receiving, sampling and storing force signals and comparing, for each conveyor belt (5), a change in one or more detected forces and reporting, for each conveyor belt (5), the potential exceeding of one or more preset limit values and perform a modification diagnosis of the velocity and tensioning settings of the conveyor belt (5) by means of the respective traction means (12, 15).

17. Method according to any one of claims 12 to 16, wherein there are provided for, by means of said control unit (U), a step of detecting a velocity for each conveyor belt (5), and a step of receiving, sampling and storing velocity and force signals, and comparing, for each conveyor belt (5), a change in the detected tensioning force (F_{T}), a change in a detected further tensioning force (F_{C}), and a detected velocity difference with respective preset limit values, and reporting, for each conveyor belt (5), the potential exceeding of one or more of said preset limit values and performing a modification diagnosis of the velocity and tensioning settings of the respective conveyor belt (5) by means of the respective traction means (12, 15).

18. Method according to any one of claims 12 to 17, wherein there is provided for, by means of said control unit (U), a step of displaying velocity, force and displacement signals in digital or graphic form as a function of time and a step of comparing, for each conveyor belt (5), a change in the detected tensioning force (F_{T}), a change in a further tensioning force (F_{C}), a change in a detected traction force (F_{TS}), a change in a calculated force (F_{B}, F_{PB}), detected displacement values, detected velocity values and detected temperature values with respective preset limit values, and there is further provided for - by means of said control unit (U) - a step of reporting, for each conveyor belt (5), the potential exceeding of one or more of said preset limit values and perform a preventive maintenance diagnosis.

## Patentansprüche

1. Vorrichtung (1) zur kontinuierlichen Herstellung einer Platte, umfassend ein oberes Förderband (5) und ein unteres Förderband (5) vom Typ einer geschlossenen Schleife, die dazu geeignet sind, eine jeweilige äußere Oberfläche der entlang einer Vorschubrichtung (X) mitzuschleppenden Platte zu kontaktieren, wobei das obere Förderband (5) und das untere Förderband (5) jeweils um eine jeweilige Stützstruktur (4) herum bewegbar sind, welche einen durch Portalstrukturen (26, 33) getragenen Rahmen (4a, 4b), die dazu geeignet sind, auf jeweiligen Fundamenten (29) aufzuliegen, sowie ein Paar gekrümmter Führungs- und Umlenkabschnitte (4c, 4d) für das jeweilige Förderband (5) umfasst, wobei die gekrümmten Führungs- und Umlenkabschnitte (4c, 4d) an einem Ende des jeweiligen Rahmens (4a, 4b) angeordnet und bewegbar sowie relativ zu dem jeweiligen Rahmen (4a, 4b) synchron verlagerbar sind, wobei die Vorrichtung (1) mindestens eine Einrichtung (6; 6'; 6"; 6"') zum Betätigen, Steuern und Überwachen des Spannungs- und Zugzustands jedes Förderbands (5) umfasst, wobei die Einrichtung (6; 6'; 6"; 6"') für jede der Stützstrukturen (4) mindestens eine Antriebs- und Schubeinheit (7; 7'; 7"; 7"') umfasst, die konfiguriert ist, um eine einstellbare und voreinstellbare, parallel zu der Vorschubrichtung (X) verlaufende Längsspannkraft (F_{T}) aufzubringen und die zugeordneten gekrümmten Führungs- und Umlenkabschnitte (4c, 4d) jedes Paars gekrümmter Abschnitte (4c, 4d) synchron zu positionieren, **dadurch gekennzeichnet, dass** das Paar gekrümmter Führungs- und Umlenkabschnitte (4c, 4d) einen ersten gekrümmten Führungs- und Umlenkabschnitt (4c) und einen zweiten gekrümmten Führungs- und Umlenkabschnitt (4d) für das jeweilige Förderband (5) umfasst; wobei die Antriebs- und Schubeinheit (7; 7'; 7"; 7"') mit dem Ende des jeweiligen Rahmens (4a, 4b) und mit einer Übertragungsbaugruppe (23) zum Übertragen einer Bewegung des ersten gekrümmten Führungs- und Umlenkabschnitts (4c) auf den zweiten gekrümmten Führungs- und Umlenkabschnitt (4d) verbunden ist; und wobei die Übertragungsbaugruppe (23) eine Verbindungseinheit (8; 8") und eine Kopplungs- und Übertragungseinheit (9) umfasst, wobei die Verbindungseinheit (8; 8") synchron und bewegbar mit dem jeweiligen ersten gekrümmten Führungs- und Umlenkabschnitt (4c) gekoppelt ist, wobei mit jeder Verbindungseinheit (8; 8") die Kopplungs- und Übertragungseinheit (9) verbunden ist, die konfiguriert ist, um bei einer Translation der Verbindungseinheit (8; 8") eine identische Längstranslation und einen Bruchteil der Längskraft (F_{T}) auf den jeweiligen zweiten gekrümmten Führungs- und Umlenkabschnitt (4d) zu übertragen, sodass einer Verlagerung des ersten gekrümmten Führungs- und Umlenkabschnitts (4c) eine gleiche Verlagerung des jeweiligen zweiten gekrümmten Führungs- und Umlenkabschnitts (4d) entspricht.

2. Vorrichtung (1) nach Anspruch 1, umfassend, für jedes aus dem oberen Förderband (5) und dem unteren Förderband (5), mindestens ein Paar von Einrichtungen (6; 6'; 6"; 6"') zum Betätigen, Steuern und Überwachen des Spannungszustands der jeweiligen Förderbänder (5).

3. Vorrichtung (1) nach Anspruch 1 oder 2, wobei jeder Rahmen (4a, 4b) an gegenüberliegenden und parallelen Längsseiten eine erste Stützseite (4a) und eine zweite Stützseite (4b) umfasst, wobei die erste Stützseite (4a) und die zweite Stützseite (4b) jeweils mit jeweiligen Längsführungsschienen (14a, 14b) versehen sind, um mit Rädern zum Gleiten und Führen des jeweiligen Förderbands (5) zusammenzuwirken; und wobei die erste Stützseite (4a) parallel zu der Vorschubrichtung (X) mit dem ersten gekrümmten Führungs- und Umlenkabschnitt (4c) verschiebbar gekoppelt ist und die zweite Stützführung (4b) parallel zu der Vorschubrichtung (X) mit dem zweiten gekrümmten Führungs- und Umlenkabschnitt (4d) verschiebbar gekoppelt ist.

4. Vorrichtung (1) nach Anspruch 2 oder 3, wobei die Übertragungsbaugruppe (23) eine weitere Verbindungseinheit (10) umfasst, die mit jedem zweiten gekrümmten Führungs- und Umlenkabschnitt (4d) gekoppelt und damit bewegbar ist, wobei die weitere Verbindungseinheit (10) mittels der jeweiligen Kopplungs- und Übertragungseinheit (9) mit der jeweiligen Verbindungseinheit (8; 8") verbunden ist; und wobei jede Verbindungseinheit (8; 8") einen Stützarm (8d; 8d") umfasst, der ein Zahnradelement (8a; 8a'; 8a"; 8a'") trägt, welches konfiguriert ist, um in ein jeweiliges stationäres Zahnstangenelement (8b; 8b'; 8b"; 8b'") einzugreifen, das an einem Endbereich der ersten Stützseite (4a) befestigt ist; und wobei die weitere Verbindungseinheit (10) ein weiteres Zahnradelement (10a) umfasst, welches konfiguriert ist, um in ein weiteres stationäres Zahnstangenelement (10b) einzugreifen, das an einem Endbereich der zweiten Stützseite (4b) befestigt ist; und wobei der Stützarm (8d; 8d") verschiebbar mit einem linearen Führungselement gekoppelt ist, das an der ersten Seite (4a) befestigt ist, um das jeweilige Zahnradelement (8a; 8a'; 8a"; 8a'") zu führen; und umfassend ein oder mehrere Gleitelemente (19, 20), die konfiguriert sind, um den ersten gekrümmten Führungs- und Umlenkabschnitt (4c) und den zweiten gekrümmten Führungs- und Umlenkabschnitt (4d) abzustützen und - parallel zu der Vorschubrichtung (X) - verschiebbar mit dem Rahmen (4a, 4b) zu verbinden.

5. Vorrichtung (1) nach einem der Ansprüche 2 bis 4, wobei die Kopplungs- und Übertragungseinheit eine Übertragungswelle (9) umfasst, die um eine quer zu der Vorschubrichtung (X) verlaufende Drehachse drehbar ist und an deren gegenüberliegenden Enden jeweils das Zahnradelement (8a; 8a'; 8a"; 8a'") und das weitere Zahnradelement (10a) montiert sind, wobei das Zahnradelement (8a; 8a'; 8a"; 8a'") und das weitere Zahnradelement (10a) drehfest mit der Übertragungswelle (9) verbunden sind, wobei die Übertragungswelle (9) mittels jeweiliger Stützlager (9c, 9d) frei drehbar an dem ersten gekrümmten Führungs- und Umlenkabschnitt (4c) und an dem zweiten gekrümmten Führungs- und Umlenkabschnitt (4d) gelagert ist, sodass einer Rototranslationsbewegung des Zahnradelements (8a; 8a'; 8a"; 8a'") eine gleiche Rototranslationsbewegung des weiteren Zahnradelements (10a) entspricht, um die Längsspannbewegung und einen Bruchteil der durch die Antriebs- und Schubgruppe (7; 7'; 7"; 7"') aufgebrachten Längsspannkraft (F_{T}) gleichmäßig auf sowohl den ersten gekrümmten Führungs- und Umlenkabschnitt (4c) als auch den zweiten gekrümmten Führungs- und Umlenkabschnitt (4d) zu verteilen.

6. Vorrichtung (1) nach Anspruch 2 oder nach einem der vorstehenden Ansprüche 3 bis 5 in Abhängigkeit von Anspruch 2, wobei die Antriebs- und Schubgruppe (7; 7'; 7"; 7'") mindestens eine ausfahrbare Einheit (7a; 7a', 7b'; 7a", 7b"; 7a'") umfasst, die konfiguriert ist, - um parallel zu der Vorschubrichtung (X) - die Längsspannkraft (F_{T}) auf die Übertragungsbaugruppe (23) zum Spannen des Förderbands (5) auszuüben.

7. Vorrichtung (1) zur kontinuierlichen Herstellung einer Platte nach Anspruch 7, wobei die mindestens eine ausfahrbare Einheit mindestens einen pneumatischen Aktuator (7b'; 7a", 7b") umfasst, wobei die Längsspannkraft (F_{T}) eine voreinstellbare pneumatische Kraft umfasst, die durch Einstellen eines pneumatischen Drucks gesteuert wird.

8. Vorrichtung (1) nach Anspruch 7, wenn Anspruch 6 von Anspruch 4 oder von Anspruch 5 bei Abhängigkeit von Anspruch 4 abhängt, wobei der Stützarm (8d") starr mit einem plattenförmigen Körper (8") verbunden ist, wobei mit dem Stützarm (8d") mindestens zwei pneumatische Aktuatoren (7a", 7b") verbunden sind, die bezüglich einer Achse des Stützarms (8d") symmetrisch zueinander angeordnet sind.

9. Vorrichtung (1) nach einem der Ansprüche 6 bis 8, wobei die ausfahrbare Einheit mindestens ein elastisches Element (7a'") umfasst, wobei die Längsspannkraft (F_{T}) eine elastische Kraft umfasst und mittels einer Vorspannung gesteuert wird, die auf das an der ausfahrbaren Einheit installierte elastische Element (7a") aufgebracht wird; und wobei die Antriebs- und Schubgruppe (7") eine Spannungseinstelleinrichtung (7b'") umfasst, die operativ mit dem elastischen Element (7a") koppelbar und konfiguriert ist, um eine Verlagerung eines Körpers (7c'") zum Abstützen und Führen des mindestens einen elastischen Elements (7a'") parallel zu der Vorschubrichtung (X) zu ermöglichen, um das mindestens eine elastische Element (7a"') zu komprimieren oder zu dekompressionieren und dadurch dessen Vorspannung und somit den Schub, der auf die Übertragungsbaugruppe (23) ausgeübt werden kann, zu variieren.

10. Vorrichtung (1) nach einem der Ansprüche 6 bis 9, wobei die ausfahrbare Einheit (7') - an einem freien Ende davon - mit einem bewegbaren Zahnstangenabschnitt (7a') versehen ist, der konfiguriert ist, mit dem Zahnradelement (8a') in Eingriff zu stehen, wobei der Zahnstangenabschnitt (7a') angeordnet ist, um in einem bezüglich des stationären Zahnstangenelements (8b') diametral gegenüberliegenden Bereich auf das Zahnradelement (8a') einzuwirken, um die durch die ausfahrbare Einheit (7') ausgeübte Spannkraft (F_{T}) zu verdoppeln.

11. Verfahren zum Durchführen, Steuern und Überwachen des Spannungs- und Zugzustands einer Vorrichtung (1) zur kontinuierlichen Herstellung einer Platte, umfassend die Schritte:
- Bereitstellen der Vorrichtung (1) mit einem oberen Förderband (5) und einem unteren Förderband (5) vom Typ einer geschlossenen Schleife, die dazu geeignet sind, eine jeweilige äußere Oberfläche der entlang einer Vorschubrichtung (X) anzutreibenden Platte zu kontaktieren, wobei das obere Förderband (5) und das untere Förderband (5) jeweils um eine jeweilige Stützstruktur (4) herum bewegbar sind, welche einen durch Portalstrukturen (26, 33) getragenen Rahmen (4a, 4b), die dazu geeignet sind, auf jeweiligen Fundamenten (29) aufzuliegen, sowie ein Paar gekrümmter Führungs- und Umlenkabschnitte (4c, 4d) für das jeweilige Förderband (5) umfasst, wobei die gekrümmten Führungs- und Umlenkabschnitte (4c, 4d) an einem Ende des jeweiligen Rahmens (4a, 4b) angeordnet und bewegbar sowie relativ zu dem jeweiligen Rahmen (4a, 4b) synchron verlagerbar sind,
- Überwachen des Spannungs- und Zugzustands für jedes Förderband (55) und, basierend auf dem Überwachen, Aufbringen - für jedes Paar von Führungselementen und gekrümmten Umlenkabschnitten (4c, 4d) - einer Längsspannkraft (F_{T}), die einstellbar und voreinstellbar parallel zu der Vorschubrichtung (X) ist, und synchrones Positionieren der zugeordneten gekrümmten Führungs- und Umlenkabschnitte (4c, 4d) jedes Paars gekrümmter Abschnitte (4c, 4d), **dadurch gekennzeichnet, dass** für die Übertragung der Bewegung eines ersten gekrümmten Abschnitts (4c) des Paars gekrümmter Abschnitte (4c, 4d) auf einen zweiten gekrümmten Abschnitt (4d) der gekrümmten Abschnitte (4c, 4d) gesorgt wird, sodass einer Verlagerung des ersten gekrümmten Abschnitts (4c) eine gleiche Verlagerung des zweiten gekrümmten Abschnitts (4d) entspricht; und wobei für das Aktivieren mindestens einer Antriebs- und Schubgruppe (7; 7'; 7"; 7'") gesorgt wird, um den ersten gekrümmten Abschnitt (4c) zu bewegen.

12. Verfahren nach Anspruch 11, wobei mittels einer Steuereinheit (U) ein Schritt des Erfassens und Überwachens einer Spannkraft (F_{T}) und einer weiteren Spannkraft (F_{C}), die auf das Förderband (5) wirken, und des Steuerns der Antriebs- und Schubgruppe (7'; 7"; 7"') vorgesehen ist, um einen vorgegebenen Wert der Spannkraft (F_{T}) in einer offenen Regelstrecke gemäß voreingestellten Werten der Spannkraft (F_{T}) zu definieren oder die Antriebs- und Schubgruppe (7'; 7"; 7"') rückgekoppelt zu steuern, um einen vorgegebenen Wert der Spannkraft (F_{T}) aufrechtzuerhalten; und wobei auch ein Schritt des Bereitstellens der Spannkraft (F_{T}) und/oder der weiteren Spannkraft (F_{C}) in digitaler oder grafischer Form als Funktion der Zeit vorgesehen ist.

13. Verfahren nach Anspruch 12, wobei mittels der Steuereinheit (U) ein Schritt des korrelierten Steuerns der Geschwindigkeiten von Zugmitteln (12, 15), die dazu geeignet sind, ein jeweiliges Förderband (5) zu bewegen, ein Schritt des Erfassens einer auf die Zugmittel (12, 15) wirkenden Kraft, ein Schritt des Erfassens einer Spannkraft (F_{T}) und des rückgekoppelten Steuerns der Antriebs- und Schubgruppe (7'; 7"; 7"') sowie ein Schritt des Erfassens einer entgegengesetzten Spannkraft (F_{C}), die auf eine Seite des Rahmens (4a, 4b) wirkt, die der Seite gegenüberliegt, an der die Spannkraft (F_{T}) aufgebracht wird, und des korrelierten rückgekoppelten Steuerns der Antriebs- und Schubgruppe (7'; 7"; 7"') und der auf die Zugmittel (12, 15) der Vorrichtung (1) wirkenden Kraft vorgesehen sind, sodass die Spannkraft (F_{T}) während des Betriebs einen Wert einer weiteren entgegengesetzten Spannkraft (F_{C}) erzeugt, der innerhalb eines Toleranzbereichs liegt, welcher eingestellt ist, um eine gleichmäßige Spannung des Förderbands (5) in dessen gesamter schleifenförmiger Erstreckung zu gewährleisten; und wobei auch ein Schritt des Bereitstellens der Geschwindigkeiten und der Spannkraft (F_{T}) und/oder der weiteren Spannkraft (F_{C}) in digitaler oder grafischer Form als Funktion der Zeit vorgesehen ist.

14. Verfahren nach Anspruch 13, wobei mittels der Steuereinheit (U) ein Schritt des Einstellens und Erfassens einer Geschwindigkeitsdifferenz der Förderbänder (5) vorgesehen ist, um die dem oberen Förderband (5) zugeordneten Zugmittel (12) und die dem unteren Förderband (5) zugeordneten Zugmittel (15) sowie die jeweilige Antriebs- und Schubgruppe (7'; 7"; 7"') korreliert zu steuern, sodass eine Geschwindigkeitsdifferenz zwischen den beiden Förderbändern (5) innerhalb eines Toleranzbereichs gehalten wird und ein unerwünschtes Durchrutschen der Förderbänder (5) und/oder eine Beschädigung von Substraten oder der Oberflächen der herzustellenden Platte vermieden wird; und wobei auch ein Schritt des Bereitstellens der Geschwindigkeiten und der Geschwindigkeitsdifferenz, der Spannkraft (F_{T}) und/oder der weiteren Spannkraft (F_{C}) in digitaler oder grafischer Form als Funktion der Zeit vorgesehen ist.

15. Verfahren nach einem der Ansprüche 14, umfassend die Schritte des Abgebens einer reaktiven Mischung zur Bildung einer inneren Schaumschicht zwischen den zwei Substraten oder Beschichtungsoberflächen der Platte und des Überwachens der Schubwirkung des Schaums auf die Förderbänder (5) sowie des korrelierten Steuerns sowohl der dem oberen Förderband (5) zugeordneten Zugmittel (12) und der jeweiligen Antriebs- und Schubgruppe (7'; 7"; 7"') als auch der dem unteren Förderband (5) zugeordneten Zugmittel (15) und der jeweiligen Antriebs- und Schubgruppe (7'; 7"; 7"'), wobei durch den Schritt des Erfassens der auf die Zugmittel (12, 15) wirkenden Kraft und/oder durch den Schritt des Erfassens der Spannkraft (F_{T}), und/oder durch den Schritt des Erfassens der entgegengesetzten Spannkraft (F_{C}) der Schub, den der Schaum auf die Förderbänder (5) ausübt, indirekt messbar ist.

16. Verfahren nach einem der Ansprüche 12 bis 15, wobei mittels der Steuereinheit (U) ein Schritt des Empfangens, Abtastens und Speicherns von Kraftsignalen und des Vergleichens einer Änderung einer oder mehrerer erfasster Kräfte für jedes Förderband (5) sowie des Meldens des potenziellen Überschreitens eines oder mehrerer voreingestellter Grenzwerte für jedes Förderband (5) und des Durchführens einer Änderungsdiagnose der Geschwindigkeits- und Spannungseinstellungen des Förderbands (5) mittels der jeweiligen Zugmittel (12, 15) vorgesehen ist.

17. Verfahren nach einem der Ansprüche 12 bis 16, wobei mittels der Steuereinheit (U) ein Schritt des Erfassens einer Geschwindigkeit für jedes Förderband (5) und ein Schritt des Empfangens, Abtastens und Speicherns von Geschwindigkeits- und Kraftsignalen und des Vergleichens einer Änderung der erfassten Spannkraft (F_{T}), einer Änderung einer erfassten weiteren Spannkraft (F_{C}) und einer erfassten Geschwindigkeitsdifferenz mit jeweiligen voreingestellten Grenzwerten für jedes Förderband (5) sowie des Meldens des potenziellen Überschreitens eines oder mehrerer der voreingestellten Grenzwerte für jedes Förderband (5) und des Durchführens einer Änderungsdiagnose der Geschwindigkeits- und Spannungseinstellungen des jeweiligen Förderbands (5) mittels der jeweiligen Zugmittel (12, 15) vorgesehen sind.

18. Verfahren nach einem der Ansprüche 12 bis 17, wobei mittels der Steuereinheit (U) ein Schritt des Darstellens von Geschwindigkeits-, Kraft- und Verlagerungssignalen in digitaler oder grafischer Form als Funktion der Zeit und ein Schritt des Vergleichens einer Änderung der erfassten Spannkraft (F_{T}), einer Änderung einer weiteren Spannkraft (F_{C}), einer Änderung einer erfassten Zugkraft (F_{TS}), einer Änderung einer berechneten Kraft (F_{B}, F_{PB}), erfasster Verlagerungswerte, erfasster Geschwindigkeitswerte und erfasster Temperaturwerte mit jeweiligen voreingestellten Grenzwerten für jedes Förderband (5) vorgesehen sind, und wobei ferner mittels der Steuereinheit (U) ein Schritt des Meldens des potenziellen Überschreitens eines oder mehrerer der voreingestellten Grenzwerte für jedes Förderband (5) und des Durchführens einer vorbeugenden Wartungsdiagnose vorgesehen ist.

## Revendications

1. Appareil (1) destiné à la production continue d'un panneau, comprenant une bande transporteuse supérieure (5) et une bande transporteuse inférieure (5), du type à boucle fermée, appropriées pour venir en contact avec une surface externe respective dudit panneau qui doit être tiré le long d'une direction d'avancement (X), ladite bande transporteuse supérieure (5) et ladite bande transporteuse inférieure (5) étant chacune mobiles autour d'une structure d'appui (4) respective qui comprend un châssis (4a, 4b) supporté par des structures en portique (26, 33) appropriées pour reposer sur des fondations (29) respectives, et une paire de parties de guidage et de renvoi incurvées (4c, 4d) pour la bande transporteuse (5) respective, lesdites parties de guidage et de renvoi incurvées (4c, 4d) étant agencées à une extrémité du châssis (4a, 4b) respectif et étant mobiles, et déplaçables de manière synchrone par rapport au châssis (4a, 4b) respectif, dans lequel ledit appareil (1) comprend au moins un dispositif (6 ; 6' ; 6'' ; 6‴) permettant d'actionner, de commander et de surveiller la tension et la traction de chaque bande transporteuse (5), ledit dispositif (6 ; 6' ; 6'' ; 6‴) comprenant, pour chacune desdites structures d'appui (4), au moins une unité d'entraînement et de poussée (7 ; 7' ; 7'' ; 7‴) configurée pour appliquer une force de tension longitudinale réglable et préréglable (F_{T}), parallèle à ladite direction d'avancement (X), et positionner de manière synchrone les parties de guidage et de renvoi incurvées conjuguées (4c, 4d) de chaque paire de parties incurvées (4c, 4d), **caractérisé en ce que** ladite paire de parties de guidage et de renvoi incurvées (4c, 4d) comprend une première partie de guidage et de renvoi incurvée (4c) et une deuxième parties de guidage et de renvoi incurvée (4d) pour la bande transporteuse respective (5) ; dans lequel ladite unité d'entraînement et de poussée (7 ; 7' ; 7'' ; 7‴) est relié à ladite extrémité du châssis respectif (4a, 4b) et à un ensemble de transmission (23) pour transmettre un mouvement de ladite première partie de guidage et de renvoi incurvée (4c) à ladite deuxième partie de guidage et de renvoi incurvée (4d) ; et dans lequel ledit ensemble de transmission (23) comprend une unité de connexion (8 ; 8") et une unité de couplage et de transmission (9), ladite unité de connexion (8 ; 8") étant couplée de manière synchrone et mobile à la première partie de guidage et de renvoi incurvée respective (4c), à chaque unité de connexion (8 ; 8") est reliée ladite unité de couplage et de transmission (9) configurée pour transmettre, lors d'un mouvement de translation de ladite unité de connexion (8 ; 8''), une translation longitudinale identique et une fraction de ladite force longitudinale (F_{T}) à la deuxième partie de guidage et de renvoi incurvée respective (4d) de sorte que pendant un déplacement de la première partie de guidage et de renvoi incurvée (4c) corresponde un déplacement égal de la deuxième partie de guidage et de renvoi incurvée respective (4d).

2. Appareil (1) selon la revendication 1, comprenant, pour chacune de ladite bande transporteuse supérieure (5) et de ladite bande transporteuse inférieure (5), au moins une paire de dispositifs (6 ; 6' ; 6" ; 6‴) permettant d'actionner, de commander et de surveiller l'état de tension des bandes transporteuses respectives (5).

3. Appareil (1) selon la revendication 1 ou 2, dans lequel chaque châssis (4a, 4b) comprend, sur des côtés longitudinaux opposés et parallèles, un premier côté d'appui (4a) et un deuxième côté d'appui (4b), ledit premier côté d'appui (4a) et ledit deuxième côté d'appui (4b) étant chacun pourvus de rails de guidage longitudinaux respectifs (14a, 14b) pour interagir avec des roues afin de faire coulisser et de guider la bande transporteuse respective (5) ; et dans lequel ledit premier côté d'appui (4a) est couplé de manière coulissante, parallèlement à ladite direction d'avancement (X), avec ladite première partie de guidage et de renvoi incurvée (4c) et ledit deuxième guide d'appui (4b) est couplé de manière coulissante, parallèlement à ladite direction d'avancement (X), avec ladite deuxième partie de guidage et de renvoi incurvée (4d).

4. Appareil (1) selon la revendication 2 ou 3, dans lequel ledit ensemble de transmission (23) comprend une unité de connexion supplémentaire (10) couplée à, et mobile avec, chaque deuxième partie de guidage et de renvoi incurvée (4d), ladite unité de connexion supplémentaire (10) étant reliée à l'unité de connexion (8 ; 8'') respective au moyen de l'unité de couplage et de transmission respective (9) ; et dans lequel chaque unité de connexion (8 ; 8'') comprend un bras de support (8d ; 8d") portant un élément d'engrenage (8a ; 8a' ; 8a'' ; 8a‴) configuré pour s'engrener avec un élément de crémaillère fixe respectif (8b ; 8b' ; 8b"; 8b‴) qui est fixé à une zone d'extrémité dudit premier côté de support (4a) ; et dans lequel ladite unité de connexion supplémentaire (10) comprend un élément d'engrenage supplémentaire (10a) configuré pour s'engrener avec un élément de crémaillère fixe supplémentaire (10b) fixé à une zone d'extrémité dudit deuxième côté d'appui (4b) ; et dans lequel ledit bras de support (8d ; 8d") est couplé de manière coulissante à un élément de guidage linéaire fixé audit premier côté (4a) pour guider l'élément d'engrenage respectif (8a ; 8a' ; 8a'' ; 8a‴) ; et comprenant un ou plusieurs éléments coulissants (19, 20) configurés pour supporter et relier de manière coulissante, parallèlement à ladite direction d'avancement (X), ladite première partie de guidage et de renvoi incurvée (4c) et ladite deuxième partie de guidage et de renvoi incurvée (4d) audit châssis (4a, 4b).

5. Appareil (1) selon l'une quelconque des revendications 2 à 4, dans lequel ladite unité de couplage et de transmission comprend un arbre de transmission (9) rotatif autour d'un axe de rotation transversal à ladite direction d'avancement (X) et aux extrémités opposées duquel est monté ledit élément d'engrenage (8a ; 8a' ; 8a'' ; 8a‴) et ledit élément d'engrenage supplémentaire (10a) respectivement, ledit élément d'engrenage (8a ; 8a' ; 8a'' ; 8a‴) et ledit élément d'engrenage supplémentaire (10a) étant relié de façon solidaire en rotation audit arbre de transmission (9), ledit arbre de transmission (9) étant monté en rotation libre sur ladite première partie de guidage et de renvoi incurvée (4c) et sur ladite deuxième partie de guidage et de renvoi incurvée (4d) au moyen de paliers d'appui respectifs (9c, 9d) de sorte qu'à un mouvement de roto-translation dudit élément d'engrenage (8a ; 8a' ; 8a'' ; 8a‴) corresponde un mouvement de roto-translation égal dudit autre élément d'engrenage (10a) de manière à répartir de manière uniforme le mouvement de tension longitudinale et une fraction de ladite force de tension longitudinale (F_{T}) appliquée par ledit groupe d'entraînement et de poussée (7 ; 7' ; 7'' ; 7‴) à la fois sur ladite première partie de guidage et de renvoi incurvée (4c) et sur ladite deuxième partie de guidage et de renvoi incurvée (4d).

6. Appareil (1) selon la revendication 2, ou selon l'une quelconque des revendications précédentes 3 à 5 telles que annexées à la revendication 2, dans lequel ledit groupe d'entraînement et de poussée (7 ; 7' ; 7'' ; 7‴) comprend au moins une unité projetable (7a ; 7a', 7b' ; 7a", 7b" ; 7a‴) configuré pour exercer, parallèlement à ladite direction d'avancement (X), ladite force de tension longitudinale (F_{T}) sur ledit ensemble de transmission (23) pour tendre ladite bande transporteuse (5).

7. Appareil (1) destiné à la production continue d'un panneau selon la revendication 7, dans lequel ladite au moins une unité projetable comprend au moins un actionneur pneumatique (7b' ; 7a", 7b''), ladite force de tension longitudinale (F_{T}) comprenant une force pneumatique préréglable commandée par le réglage d'une pression pneumatique.

8. Appareil (1) selon la revendication 7 lorsque la revendication 6 dépend de la revendication 4 ou de la revendication 5 lorsqu'elle dépend de la revendication 4, dans lequel ledit bras de support (8d") est relié de façon rigide à un corps en forme de plaque (8''), et dans lequel le bras de support (8d") est relié à au moins deux actionneurs pneumatiques (7a", 7b") positionnés mutuellement de façon symétrique par rapport à un axe dudit bras de support (8d'').

9. Appareil (1) selon l'une des revendications 6 à 8, dans lequel ladite unité projetable comprend au moins un élément élastique (7a‴), ladite force de tension longitudinale (F_{T}) comprenant une force élastique et étant contrôlée au moyen d'une précharge appliquée audit élément élastique (7a") installé sur ladite unité projetable ; et dans lequel ledit groupe d'entraînement et de poussée (7") comprend un dispositif de réglage de tension (7b‴) pouvant être couplé de manière fonctionnelle avec ledit élément élastique (7a"), et configuré pour permettre un déplacement parallèlement à ladite direction d'avancement (X) d'un corps (7c‴) pour supporter et guider ledit au moins un élément élastique (7a‴) pour comprimer ou décomprimer ledit au moins un élément élastique (7a‴) en faisant varier la précharge de celui-ci et par conséquent la poussée qui peut être exercée sur ledit ensemble de transmission (23).

10. Appareil (1) selon l'une des revendications 6 à 9, dans lequel ladite unité projetable (7') comprend, à une extrémité libre de celle-ci, une partie de crémaillère mobile (7a') configurée pour venir en prise avec ledit élément d'engrenage (8a'), ladite partie de crémaillère (7a') étant agencée pour agir sur ledit élément d'engrenage (8a') dans une zone diamétralement opposée par rapport audit élément de crémaillère fixe (8b') pour doubler la force de tension (F_{T}) exercée par ladite unité projetable (7').

11. Procédé permettant d'effectuer, de commander et de surveiller l'état de tension et de traction d'un appareil (1) pour la production continue d'un panneau, comprenant les étapes consistant à :
- fournir audit appareil (1) une bande transporteuse supérieure (5) et une bande transporteuse inférieure (5), du type à boucle fermée, appropriées pour venir en contact avec une surface externe respective dudit panneau à entraîner le long d'une direction d'avancement (X), ladite bande transporteuse supérieure (5) et ladite bande transporteuse inférieure (5) étant chacune mobiles autour d'une structure d'appui (4) respective qui comprend un châssis (4a, 4b) supporté par des structures en portique (26, 33) appropriées pour reposer sur des fondations (29) respectives, et une paire de parties de guidage et de renvoi incurvées (4c, 4d) de la bande transporteuse (5) respective, lesdites parties de guidage et de renvoi incurvées (4c, 4d) étant agencées à une extrémité du châssis (4a, 4b) respectif et étant mobiles, et déplaçables de manière synchrone par rapport au châssis (4a, 4b) respectif,
- surveiller l'état de tension et de traction de chaque bande transporteuse (55) et, sur la base de ladite surveillance, appliquer, pour chaque paire de parties incurvées de guidage et de renvoi (4c, 4d), une force de tension longitudinale (F_{T}) réglable et préréglable parallèlement à ladite direction d'avancement (X) et disposer de manière synchrone les parties incurvées conjuguées de guidage et de renvoi (4c, 4d) de chaque paire de parties incurvées (4c, 4d), **caractérisé en ce qu'**il est prévu la transmission du mouvement d'une première partie incurvée (4c) de ladite paire de parties incurvées (4c, 4d) à une deuxième partie incurvée (4d) desdites parties incurvées (4c, 4d) de sorte qu'à un déplacement de ladite première partie incurvée (4c) correspond un déplacement égal de ladite deuxième partie incurvée (4d) ; et dans lequel il est prévu d'activer au moins un groupe d'entraînement et de poussée (7 ; 7' ; 7'' ; 7‴) pour déplacer ladite première partie incurvée (4c).

12. Procédé selon la revendication 11, dans lequel il est prévu, au moyen d'une unité de commande (U), une étape de détection et de surveillance d'une force de tension (F_{T}) et d'une force de tension supplémentaire (F_{C}) agissant sur ladite bande transporteuse (5) et commandant ledit groupe d'entraînement et de poussée (7' ; 7'' ; 7‴) pour définir une valeur de force de tension préétablie (F_{T}) dans une boucle de réglage ouverte selon des valeurs de force de tension (F_{T}) préréglées ou commander en rétroaction ledit groupe d'entraînement et de poussée (7' ; 7'' ; 7‴) pour maintenir une valeur de force de tension (F_{T}) préétablie ; et dans lequel il est également prévu une étape de fourniture sous forme numérique ou graphique, ladite force de tension (F_{T}) et/ou ladite force de tension supplémentaire (F_{C}) en fonction du temps.

13. Procédé selon la revendication 12, dans lequel, au moyen de ladite unité de commande (U), une étape de commande de manière corrélée des vitesses de moyens de traction (12, 15) appropriés pour déplacer une bande transporteuse (5) respective, une étape de détection d'une force agissant sur lesdits moyens de traction (12, 15), une étape de détection d'une force de tension (F_{T}) et de commande en rétroaction dudit groupe d'entraînement et de poussée (7' ; 7'' ; 7'''), et une étape de détection d'une force de tension opposée (F_{C}) agissant sur un côté dudit cadre (4a, 4b) opposé au côté sur lequel est appliquée la force de tension (F_{T}) et commande de manière corrélée en rétroaction ledit groupe d'entraînement et de poussée (7' ; 7'' ; 7‴) et la force agissant sur lesdits moyens de traction (12, 15) dudit appareil (1) de sorte que ladite force de tension (F_{T}) génère, pendant le fonctionnement, une valeur d'une force de tension opposée supplémentaire (F_{C}) qui est comprise dans une plage de tolérance définie pour garantir une tension uniforme de la bande transporteuse (5) dans toute son extension en forme de boucle ; et dans lequel il est prévu une étape consistant à mettre à disposition en forme numérique ou graphique lesdites vitesses et ladite force de tension (F_{T}) et/ou ladite force de tension supplémentaire (F_{C}) en fonction du temps.

14. Procédé selon la revendication 13, dans lequel il est prévu, au moyen de ladite unité de commande (U), une étape de réglage et de détection d'une différence de vitesse desdites bandes transporteuses (5) pour commander de manière corrélée lesdits moyens de traction (12) associés à ladite bande transporteuse supérieure (5) et lesdits moyens de traction (15) associés à ladite bande transporteuse inférieure (5) et le groupe d'entraînement et de poussée respectif (7' ; 7'' ; 7‴) de manière à maintenir une différence de vitesse entre les deux bandes transporteuses (5) dans une plage de tolérance et éviter un glissement indésirable des bandes transporteuses (5) et/ou un endommagement sur des substrats ou sur les surfaces dudit panneau en cours de production ; et dans lequel il est prévu une étape de mise à disposition en forme numérique ou graphique desdites vitesses et de ladite différence de vitesse, de ladite force de tension (F_{T}) et/ou de ladite force de tension supplémentaire (F_{C}) en fonction du temps.

15. Procédé selon l'une des revendications 14, comprenant les étapes consistant à distribuer un mélange réactif pour former une couche de mousse interne entre les deux substrats ou surfaces de revêtement dudit panneau et à surveiller l'effet de poussée de la mousse sur lesdites bandes transporteuses (5) et à commander, de manière corrélée, à la fois lesdits moyens de traction (12) associés à ladite bande transporteuse supérieure (5) et le groupe d'entraînement et de poussée respectif (7' ; 7" ; 7‴) et lesdits moyens de traction (15) associés à ladite bande transporteuse inférieure (5), ainsi que le groupe d'entraînement et de poussée respectif (7' ; 7'' ; 7'''), dans lequel au moyen de l'étape de détection de la force agissant sur lesdits moyens de traction (12, 15), et/ou au moyen de l'étape de détection de la force de tension (F_{T}), et/ou au moyen de l'étape de détection de la force de tension opposée (F_{C}), la poussée que la mousse exerce sur lesdites bandes transporteuses (5) est mesurable indirectement.

16. Procédé selon l'une des revendications 12 à 15, dans lequel il est prévu, au moyen de ladite unité de commande (U), une étape de réception, d'échantillonnage et de mémorisation des signaux de force et de comparaison, pour chaque bande transporteuse (5), d'une variation d'une ou de plusieurs forces détectées et de signalement, pour chaque bande transporteuse (5), du dépassement potentiel d'une ou de plusieurs valeurs limites préréglées et d'exécution d'un diagnostic de modification des réglages de vitesse et de tension de la bande transporteuse (5) par des moyens de traction (12, 15) respectifs.

17. Procédé selon l'une quelconque des revendications 12 à 16, dans lequel il est prévu, au moyen de ladite unité de commande (U), une étape de détection d'une vitesse pour chaque bande transporteuse (5), et une étape de réception, d'échantillonnage et de mémorisation des signaux de vitesse et de force, et de comparaison, pour chaque bande transporteuse (5), d'une variation de la force de tension détectée (F_{T}), d'une variation d'une force de tension supplémentaire détectée (F_{C}), et d'une différence de vitesse détectée avec des valeurs limites prédéfinies respectives, et de signalement, pour chaque bande transporteuse (5), du dépassement potentiel d'une ou de plusieurs desdites valeurs limites prédéfinies et d'exécution d'un diagnostic de modification des réglages de vitesse et de tension de la bande transporteuse (5) respective au moyen des moyens de traction (12, 15) respectifs.

18. Procédé selon l'une quelconque des revendications 12 à 17, dans lequel il est prévu, au moyen de ladite unité de commande (U), une étape d'affichage de signaux de vitesse, de force et de déplacement sous forme numérique ou graphique en fonction du temps et une étape de comparaison, pour chaque bande transporteuse (5), d'une variation de la force de tension détectée (F_{T}), d'une variation d'une autre force de tension (F_{C}), d'un changement d'une force de traction détectée (F_{TS}), d'un changement d'une force calculée (F_{B}, F_{PB}), des valeurs de déplacement détectées, des valeurs de vitesse détectées et des valeurs de température détectées avec des valeurs limites prédéfinies respectives, et il est en outre prévu, au moyen de ladite unité de commande (U), une étape consistant à signaler, pour chaque bande transporteuse (5), le dépassement potentiel d'une ou de plusieurs desdites valeurs limites prédéfinies et à effectuer un diagnostic de maintenance préventive.
